(19) Europäisches Patentamt / European Patent Office / Office européen des brevets

(11) **EP 4 778 723 A1**

(12) **EUROPEAN PATENT APPLICATION**
published in accordance with Art. 153(4) EPC

(43) Date of publication:
**22.07.2026 Bulletin 2026/30**

(21) Application number: **25844435.5**

(22) Date of filing: **30.06.2025**

(51) International Patent Classification (IPC):
**B32B 27/32** (2006.01)     **B32B 9/00** (2006.01)
**B32B 27/34** (2006.01)     **B65D 65/40** (2006.01)

(52) Cooperative Patent Classification (CPC):
**B32B 9/00; B32B 27/32; B32B 27/34; B65D 65/40;**
**Y02W 30/80**

(86) International application number:
**PCT/JP2025/023481**

(87) International publication number:
**WO 2026/023340 (29.01.2026 Gazette 2026/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **23.07.2024 JP 2024118262**
                  **02.04.2025 JP 2025061481**

(71) Applicant: **Dai Nippon Printing Co., Ltd.**
**Tokyo 162-8001 (JP)**

(72) Inventors:
 • **SUZUKI, Tsuyoshi**
  **Tokyo 162-8001 (JP)**
 • **NISHIDA, Tomoyuki**
  **Tokyo 162-8001 (JP)**
 • **MIYAZAKI, Yusuke**
  **Tokyo 162-8001 (JP)**

 • **IWASAKI, Yuya**
  **Tokyo 162-8001 (JP)**
 • **TAMADA, Shuhei**
  **Tokyo 162-8001 (JP)**
 • **MORIMOTO, Taro**
  **Tokyo 162-8001 (JP)**
 • **OIKAWA, Wataru**
  **Tokyo 162-8001 (JP)**
 • **KOICHI, Chisayo**
  **Tokyo 162-8001 (JP)**
 • **ONODA, Junna**
  **Tokyo 162-8001 (JP)**
 • **SOEDA, Yuki**
  **Tokyo 162-8001 (JP)**

(74) Representative: **Müller-Boré & Partner**
**Patentanwälte PartG mbB**
**Friedenheimer Brücke 21**
**80639 München (DE)**

(54) **BARRIER FILM, LAMINATE, AND PACKAGING BAG**

(57)     A barrier film of the present disclosure includes a vapor-deposited film 15 on a first resin layer 11 side of a polymer film 10. The polymer film 10 includes a first resin layer 11, a second resin layer 12, and a third resin layer 13 in this order, the first resin layer 11 constitutes one outermost layer of the polymer film 10, the first resin layer 11 contains a polyamide resin, the polyamide resin contains an aromatic polyamide, a ratio of the number of dicarboxylic acid units contained in the aromatic polyamide to a total number of aminocarboxylic acid units and dicarboxylic acid units contained in the polyamide resin constituting the first resin layer 11 is greater than 65% by mole, a ratio of the number of isophthalic acid units contained in the aromatic polyamide to the total number of the aminocarboxylic acid units and the dicarboxylic acid units contained in the polyamide resin constituting the first resin layer 11 is 30% by mole or greater, the second resin layer 12 contains an acid-modified product of polypropylene, the third resin layer 13 contains homopolypropylene, and the vapor-deposited film 15 contains an inorganic oxide.

EP 4 778 723 A1

*Fig. 3*

**Description**

Technical Field

The present disclosure relates to a barrier film, a laminate, and a packaging bag.

Background Art

A flexible packaging material is formed by laminating a plurality of films. A film made of polyester such as polyethylene terephthalate is used to impart strength and heat resistance to the packaging material, a film made of polyamide 6 is used to impart pinhole resistance thereto, and a film made of polypropylene is used to impart strength and water vapor barrier properties thereto. These films are usually biaxially stretched and provided with printability.

Printing is performed on the biaxially stretched films as necessary, and unstretched films made of polyethylene or polypropylene that are not usually stretched are laminated onto the printed surface side. A packaging bag is prepared from a laminate composed of a plurality of films by placing unstretched films made of polyethylene or polypropylene inside and heat-sealing the films placed inside.

In order to impart barrier properties to the packaging bag, aluminum foil, a film vapor-deposited with aluminum, alumina, or silicon oxide, a layer made of an ethylene-vinyl alcohol copolymer or polyvinyl alcohol, or the like is provided between the biaxially stretched film and the unstretched film.

Flexible packaging materials can be made into packaging materials that satisfy required performance and are used for packaging a variety of contents by laminating a plurality of different materials. In recent years, there has been an increasing demand for recycling flexible packaging materials in order to reduce carbon dioxide emissions, which are considered as a major cause of global warming. Since recycling packaging materials made of different materials is extremely difficult, the major trend is to use mono-materials composed of a single material to enable the recycling of flexible packaging materials. Polyolefins that are easy to recycle are considered preferable as mono-materials.

A packaging bag for heat sterilization is filled with contents, sealed, and subjected to a boiling treatment or a retort treatment. Further, the packaging bag is filled with heated contents in some cases. Since the packaging bag is heated by these treatments, polypropylene having higher heat resistance than polyethylene is suitably used for an unstretched film that is sealed by heat sealing. When polypropylene is used as a constituent material of a packaging material, properties suitable for a packaging material, such as printability, barrier properties, heat sealing properties, and lamination properties, are imparted to a film made of polypropylene. Printing is performed on a biaxially stretched polypropylene film having strength. Heat sealing is performed by an unstretched polypropylene film.

In order to impart barrier properties to a packaging material while enabling recycling, it is considered appropriate to use a polypropylene film vapor-deposited with alumina or silicon oxide. Therefore, a polypropylene film vapor-deposited with an inorganic oxide such as alumina or silicon oxide has been proposed as a film for a packaging material composed of a mono-material.

However, even when an inorganic oxide is vapor-deposited on the surface of a polypropylene film, barrier properties may not be exhibited due to minute irregularities of the surface of the stretched polypropylene film. Further, the adhesive strength between the vapor-deposited inorganic oxide and the surface of the polypropylene film is small, the physical properties of the laminate are insufficient in some cases. Therefore, in order to compensate for disadvantages of the polypropylene film in terms of vapor deposition, it has been proposed to provide a layer containing a resin material with a melting point of 180°C or higher on one surface of a biaxially stretched polypropylene film and to vapor-deposit an inorganic oxide on the surface of this layer (PTL 1).

Citation List

Patent Literature

PTL 1: Japanese Unexamined Patent Application Publication No. 2022-7964

Summary of Invention

Technical Problem

PTL 1 describes a polyamide as a resin material having a melting point of 180°C or higher. Among polyamide resins, a film is easily stretched when a polyamide containing isophthalic acid as a constitutional unit is employed. Therefore, a polyamide containing isophthalic acid as a constitutional unit is considered to be employed as a resin material having a melting point of 180°C or higher for the purpose of improving the film-forming properties of a film.

However, some barrier films obtained by providing a layer that contains a polyamide containing isophthalic acid on one surface of a polypropylene film and vapor-depositing an inorganic oxide on the surface of this layer have poor gas barrier properties and poor heat resistance.

Further, when a packaging bag is heat-sterilized, films constituting the packaging bag expand or shrink so that stress is generated between layers, and heating of the packaging bag in a state where the stress acts between the layers may cause peeling between the film layers. There has been a demand for suppressing peeling between layers in a polymer film obtained by providing a layer containing a polyamide resin on one surface of a polypropylene film.

Accordingly, an object of the present disclosure is to provide a barrier film that has excellent film-forming properties and recyclability, can suppress peeling between layers, and has excellent gas barrier properties and heat resistance.

Further, another object of the present disclosure is to provide a laminate and a packaging bag produced using the barrier film.

Solution to Problem

The present inventors have found that in a layer provided on one surface of a polypropylene film and containing a polyamide that contains isophthalic acid, a barrier film having improved film-forming properties and capable of achieving high heat resistance and high gas barrier properties is obtained by using a certain amount or more of an aromatic polyamide which is a polyamide resin containing a benzene ring while maintaining the ratio of the number of isophthalic acid units at a certain level or higher.

Further, the present inventors have focused on the fact that an acid-modified product of polypropylene is a polypropylene-based resin with high adhesion, and found that peeling between layers can be suppressed without impairing recyclability by providing a layer containing an acid-modified product of polypropylene between a polypropylene film and a layer containing a polyamide.

The present inventors have conducted further examination based on these findings, and have completed the present disclosure.

The present disclosure is achieved by the following aspects.

<1> A barrier film including: a vapor-deposited film on a first resin layer side of a polymer film,

in which the polymer film includes a first resin layer, a second resin layer, and a third resin layer in this order,

the first resin layer constitutes one outermost layer of the polymer film,

the first resin layer contains a polyamide resin, the polyamide resin contains an aromatic polyamide,

a ratio of the number of dicarboxylic acid units contained in the aromatic polyamide to a total number of aminocarboxylic acid units and dicarboxylic acid units contained in the polyamide resin constituting the first resin layer is greater than 65% by mole,

a ratio of the number of isophthalic acid units contained in the aromatic polyamide to the total number of the aminocarboxylic acid units and the dicarboxylic acid units contained in the polyamide resin constituting the first resin layer is 30% by mole or greater,

the second resin layer contains an acid-modified product of polypropylene,

the third resin layer contains homopolypropylene, and

the vapor-deposited film contains an inorganic oxide.

<2> The barrier film according to <1>, in which the ratio of the number of the dicarboxylic acid units contained in the aromatic polyamide to the total number of the aminocarboxylic acid units and the dicarboxylic acid units contained in the polyamide resin constituting the first resin layer is 80% by mole or greater.

<3> The barrier film according to <1> or <2>, in which the ratio of the number of the isophthalic acid units contained in the aromatic polyamide to the total number of the aminocarboxylic acid units and the dicarboxylic acid units contained in the polyamide resin constituting the first resin layer is 55% by mole or greater.

<4> The barrier film according to any one of <1> to <3>, in which the first resin layer contains one type of polyamide resin.

<5> The barrier film according to <4>, in which a content of the polyamide resin in the first resin layer is 70% by mass or greater.

<6> The barrier film according to any one of <1> to <3>, in which the polyamide resin contained in the first resin layer consists of two types, a first polyamide and a second polyamide,

the first polyamide is an aromatic polyamide, and
the second polyamide is an aromatic polyamide or an aliphatic polyamide.

<7> The barrier film according to <6>, in which a content of the first polyamide in the first resin layer is 76% by mass or greater and less than 100% by mass.

<8> The barrier film according to <6> or <7>, in which a content of the second polyamide in the first resin layer is greater than 0% by mass and 24% by mass or less.

<9> The barrier film according to any one of <1> to <8>, in which a content of the polypropylene in the polymer film is 70% by mass or greater.

<10> The barrier film according to any one of <1> to <9>, in which the third resin layer has the largest thickness among the first resin layer, the second resin layer, and the third resin layer, and

the thickness of each layer constituting the polymer film satisfies Expressions (1) and (2),
thickness of first resin layer ≤ (thickness of polymer film)/10 (1)
thickness of second resin layer ≤ (thickness of polymer film)/5 (2).

<11> The barrier film according to any one of <1> to <10>, in which the polymer film includes a fourth resin layer on a side of the third resin layer opposite to the second resin layer, and
the fourth resin layer contains a copolymer of propylene and an olefin other than propylene.

<12> The barrier film according to any one of <1> to <11>, further including: a barrier coating layer on the vapor-deposited film side.

<13> A laminate including: the barrier film according to any one of <1> to <12>; and a heat sealant film.

<14> The laminate according to <13>, further including: a polypropylene base material film.

<15> The laminate according to <13>, in which the laminate includes the polypropylene base material film on a side of the barrier film opposite to the heat sealant film, and
a wet peel strength is 0.3 N/15 mm or greater when a film including the polypropylene base material film and a film including the barrier film and the heat sealant film are peeled off in conformity with JIS K 6854-2:1999 after a retort treatment is performed at 121°C and 0.2 MPa for 30 minutes.

<16> A packaging bag including: the laminate according to any one of <13> to <15>.

<17> The packaging bag according to <16>, in which the packaging bag is a heat-sterilized food pouch.

<18> The packaging bag according to <17>, in which the laminate includes the polypropylene base material film on a side of the barrier film opposite to the heat sealant film, and
a wet peel strength is 0.3 N/15 mm or greater when a film including the polypropylene base material film and a film including the barrier film and the heat sealant film are peeled off in conformity with JIS K 6854-2:1999.

<19> A method of producing a barrier film which includes a vapor-deposited film on a first resin layer side of a polymer film,

in which the polymer film includes a first resin layer, a second resin layer, and a third resin layer in this order,

the first resin layer constitutes one outermost layer of the polymer film,

the first resin layer contains a polyamide resin, the polyamide resin contains an aromatic polyamide,

a ratio of the number of dicarboxylic acid units contained in the aromatic polyamide to a total number of aminocarboxylic acid units and dicarboxylic acid units contained in the polyamide resin constituting the first resin layer is greater than 65% by mole,

a ratio of the number of isophthalic acid units contained in the aromatic polyamide to the total number of the aminocarboxylic acid units and the dicarboxylic acid units contained in the polyamide resin constituting the first resin layer is 30% by mole or greater,

the second resin layer contains an acid-modified product of polypropylene,

the third resin layer contains homopolypropylene,

the vapor-deposited film contains an inorganic oxide, and

the vapor-deposited film is formed by using a physical vapor deposition method.

Advantageous Effects of Invention

According to the present disclosure, it is possible to provide a barrier film that has excellent film-forming properties and recyclability, can suppress peeling between layers, and has excellent gas barrier properties and heat resistance.

Further, according to the present disclosure, it is possible to provide a laminate and a packaging bag produced using the barrier film.

Brief Description of Drawings

[Fig. 1] Fig. 1 is a schematic cross-sectional view showing a polymer film according to an embodiment of the present disclosure.

[Fig. 2] Fig. 2 is a schematic cross-sectional view showing a polymer film according to another embodiment of the present disclosure.

[Fig. 3] Fig. 3 is a schematic cross-sectional view showing a barrier film according to an embodiment of the present disclosure.

[Fig. 4] Fig. 4 is a schematic cross-sectional view showing a barrier film according to another embodiment of the present disclosure.

[Fig. 5] Fig. 5 is a schematic cross-sectional view showing a barrier coating layer provided on the barrier film according to the embodiment of the present disclosure.

[Fig. 6] Fig. 6 is a schematic cross-sectional view showing a laminate according to an embodiment of the present disclosure.

[Fig. 7] Fig. 7 is a schematic cross-sectional view showing a laminate according to another embodiment of the present disclosure.

[Fig. 8] Fig. 8 is a graph showing a change in tensile stress with respect to a distance between a pair of grips pulling two films for measuring the peel strength.

[Fig. 9] Fig. 9 is a front view showing a packaging bag according to an embodiment of the present disclosure.

Description of Embodiments

In the present specification, when a certain parameter has a plurality of upper and lower limit candidates, the numerical range of the parameter may be defined by combining any one of the upper limit candidates with any one of the lower limit candidates. As an example, the description "a parameter B is preferably A1 or greater, more preferably A2 or greater, and still more preferably A3 or greater. The parameter B is preferably A4 or less, more preferably A5 or less, and still more preferably A6 or less" will be described. In this example, the numerical range of this parameter B may be A1 or greater and A4 or less, A1 or greater and A5 or less, A1 or greater and A6 or less, A2 or greater and A4 or less, A2 or greater and A5 or less, A2 or greater and A6 or less, A3 or greater and A4 or less, A3 or greater and A5 or less, and A3 or greater and A6 or less.

(Polymer film)

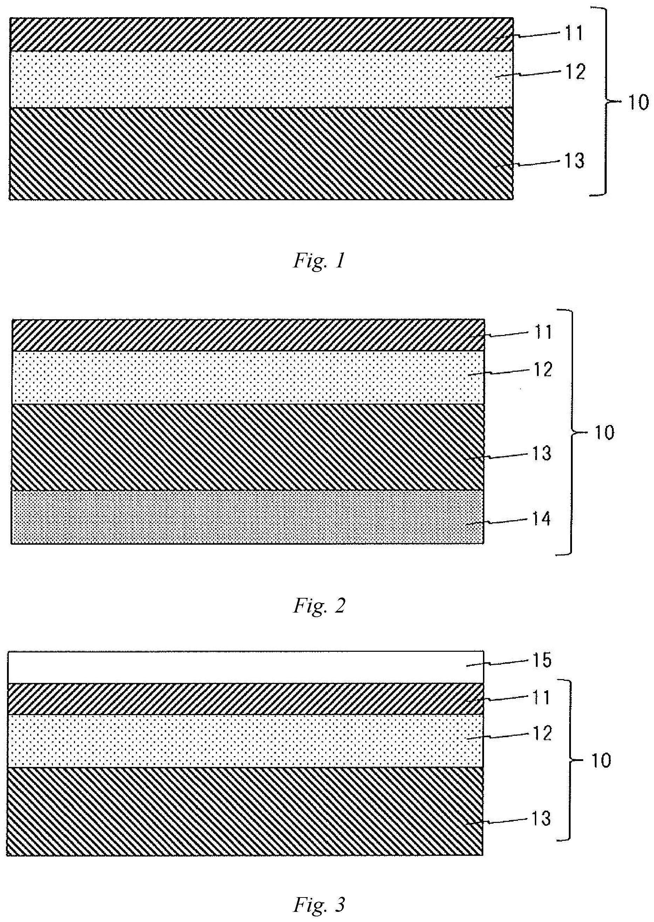

Fig. 1 is a schematic cross-sectional view showing a polymer film 10 used in a barrier film of the present disclosure. The polymer film 10 includes a first resin layer 11, a second resin layer 12, and a third resin layer 13 in this order. The first resin layer 11 constitutes one outermost layer of the polymer film 10. The third resin layer 13 constitutes the other outermost layer of the polymer film 10.

Fig. 2 is a schematic cross-sectional view showing the polymer film 10 used in the barrier film of the present disclosure. The polymer film 10 includes the first resin layer 11, the second resin layer 12, the third resin layer 13, and a fourth resin layer 14 in this order. The first resin layer 11 constitutes one outermost layer of the polymer film 10. The fourth resin layer 14 constitutes the other outermost layer of the polymer film 10.

As shown in Fig. 3, a vapor-deposited film 15 is provided on the first resin layer side of the polymer film 10 and used as a barrier film.

Hereinafter, each layer of the polymer film 10 will be described.

(First resin layer)

The first resin layer 11 contains a polyamide resin, and the polyamide resin contains an aromatic polyamide. The aromatic polyamide is a polyamide containing a benzene ring. Examples of the aromatic polyamide include a copolymer of a diamine containing a benzene ring and an aliphatic dicarboxylic acid, a copolymer of an aliphatic diamine and a dicarboxylic acid containing a benzene ring, a copolymer of a diamine containing a benzene ring and a dicarboxylic acid containing a benzene ring, a copolymer of a diamine containing a benzene ring, an aliphatic dicarboxylic acid, and a dicarboxylic acid containing a benzene ring, a copolymer of an aliphatic diamine, a diamine containing a benzene ring, and a dicarboxylic acid containing a benzene ring, and a copolymer of a diamine containing a benzene ring, an aliphatic diamine, a dicarboxylic acid containing a benzene ring, and an aliphatic dicarboxylic acid.

In any of the copolymers, two or more types of diamines containing a benzene ring may be used.

In any of the copolymers, two or more types of aliphatic diamines may be used.

In any of the copolymers, two or more types of dicarboxylic acids containing a benzene ring may be used.

In any of the copolymers, two or more types of aliphatic dicarboxylic acids may be used.

Examples of the diamine containing a benzene ring include m-xylylenediamine, p-xylylenediamine, m-phenylenediamine, and p-phenylenediamine. One or more types of these diamines are used.

Examples of the dicarboxylic acid containing a benzene ring include aromatic dicarboxylic acids such as terephthalic acid (TPA) and isophthalic acid (IPA), and naphthalenedicarboxylic acids such as 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid, and 2,7-naphthalenedicarboxylic acid. One or more types of these dicarboxylic acids are used.

Examples of the aliphatic diamine include linear aliphatic diamines such as 1,4-butanediamine, 1,5-pentanediamine, 1,6-hexanediamine (hexamethylenediamine), 1,7-heptanediamine, 1,8-octanediamine, 1,9-nonanediamine (NDA), 1,10-decanediamine (DDA), 1,11-undecanediamine, and 1,12-dodecanediamine, branched aliphatic diamines such as 2-methyl-1,8-octanediamine (MODA), 4-methyl-1,8-octanediamine, 5-methyl-1,9-nonanediamine, 2,2,4-/2,4,4-trimethyl-1,6-hexanediamine, 2-methyl-1,5-pentanediamine, 2-methyl-1,6-hexanediamine, and 2-methyl-1,7-heptanediamine, and alicyclic diamines such as isophoronediamine, norbornanedimethylamine, and tricyclodecanedimethylamine. One or more types of these diamines are used.

The aliphatic dicarboxylic acid is an aliphatic dicarboxylic acid having 2 or more and 20 or less carbon atoms. In consideration of polymerization suitability, processability, and the like, adipic acid is most preferable, and examples of other dicarboxylic acids include oxalic acid, malonic acid, succinic acid, glutaric acid, pimelic acid, suberic acid, azelaic acid, sebacic acid, undecanedioic acid, dodecanedioic acid, hexadecadioic acid, eicosanedioic acid, eicosadienedioic acid, and 2,2,4-trimethyladipic acid. One or more types of these dicarboxylic acids are used.

The first resin layer 11 may contain an aliphatic polyamide as the polyamide resin. The aliphatic polyamide is a polyamide containing no benzene ring. Examples of the aliphatic polyamide include polyamide 6, 7, 10, 11, 12, 410, 56, 66, 69, 610, 611, 612, and 1010. The first resin layer 11 may contain one or more types of these polyamides.

Further, the first resin layer 11 may contain resins other than the polyamide, such as polyester, an acrylic resin, and an ionomer resin as long as the processability and the physical properties are not affected by such resins.

The ratio of the number of dicarboxylic acid units contained in the aromatic polyamide to the total number of aminocarboxylic acid units and dicarboxylic acid units contained in the polyamide resin constituting the first resin layer is greater than 65% by mole, preferably 70% by mole or greater, more preferably 80% by mole or greater, and still more preferably 85% by mole or greater. The upper limit of the ratio of the number of dicarboxylic acid units contained in the aromatic polyamide to the total number of aminocarboxylic acid units and dicarboxylic acid units contained in the polyamide resin constituting the first resin layer is 100% by mole. For example, the ratio of the number of dicarboxylic acid units contained in the aromatic polyamide to the total number of aminocarboxylic acid units and dicarboxylic acid units contained in the polyamide resin constituting the first resin layer is greater than 65% by mole and 100% by mole or less, preferably 70% by mole or greater and 100% by mole or less, more preferably 80% by mole or greater and 100% by mole or less, and still more preferably 85% by mole or greater and 100% by mole or less.

Examples of the polyamide resin include a polyamide resin (ring-opening polymerized polyamide) obtained by ring-opening polymerization of a lactam and a polyamide resin (copolymerized polyamide) obtained by copolymerization of a diamine and a dicarboxylic acid. The aminocarboxylic acid unit is a constitutional unit of the ring-opening polymerized polyamide. The dicarboxylic acid unit is one of the constitutional units of the copolymerized polyamide. "The total number of aminocarboxylic acid units and dicarboxylic acid units contained in the polyamide resin constituting the first resin layer" corresponds to the total mass of substance (moles) of the aminocarboxylic acid units and the dicarboxylic acid units contained in the polyamide resin constituting the first resin layer, and denotes the amount of all polyamide resins constituting the first resin layer. Further, "the number of dicarboxylic acid units contained in the aromatic polyamide" corresponds to the amount (moles) of substance of the dicarboxylic acid units contained in the aromatic polyamide, and denotes the amount of the aromatic polyamide when the aromatic polyamide contains no aminocarboxylic acid units. Therefore, "the ratio of the number of dicarboxylic acid units contained in the aromatic polyamide to the total number of aminocarboxylic acid units and dicarboxylic acid units contained in the polyamide resin constituting the first resin layer" denotes the proportion of the aromatic polyamide in all polyamide resins constituting the first resin layer.

A method of theoretically calculating the ratio of the number of dicarboxylic acid units contained in the aromatic polyamide to the total number of aminocarboxylic acid units and dicarboxylic acid units contained in the polyamide resin constituting the first resin layer will be described with examples.

For example, when all the polyamide resins constituting the first resin layer are aromatic polyamides, the ratio of the number of dicarboxylic acid units contained in the aromatic polyamide to the total number of aminocarboxylic acid units and dicarboxylic acid units contained in the polyamide resin constituting the first resin layer is 100% by mole.

The following describes a case where the polyamide resin constituting the first resin layer consists of 10% by mass of polyamide 6 and 90% by mass of polyamide 6I (a copolymer of 1,6-hexanediamine and isophthalic acid). Polyamide 6 contains 6-aminohexanoic acid units ($-NH-(CH_2)_5-CO-$, molecular weight: 113) as the aminocarboxylic acid units. Polyamide 6I contains 1,6-hexanediamine units ($-NH-(CH_2)_6-NH-$, molecular weight: 114) as the amine units and isophthalic acid units ($-CO-C_6H_4-CO-$, molecular weight: 132) as the dicarboxylic acid units in equal numbers. Therefore, the ratio of the number of dicarboxylic acid units contained in the aromatic polyamide to the total number of aminocarboxylic acid units and dicarboxylic acid units contained in the polyamide resin constituting the first resin layer is calculated as "$\{90/(114 + 132)\} / [\{10/113\} + \{90/(114 + 132)\}] \times 100 = 80.5\%$ by mole".

When the ratio of the number of dicarboxylic acid units contained in the aromatic polyamide to the total number of aminocarboxylic acid units and dicarboxylic acid units contained in the polyamide resin constituting the first resin layer is greater than or equal to the lower limit, the gas barrier properties and the heat resistance of the barrier film are improved.

The ratio of the number of isophthalic acid units contained in the aromatic polyamide to the total number of aminocarboxylic acid units and dicarboxylic acid units contained in the polyamide resin constituting the first resin layer is 30% by mole or greater, preferably 40% by mole or greater, more preferably 50% by mole or greater, still more preferably 55% by mole or greater, even still more preferably 57% by mole or greater, particularly preferably 60% by mole or greater, and is 100% by mole or less, preferably 90% by mole or less, more preferably 80% by mole or less, and still more preferably 70% by mole or less. For example, the ratio of the number of isophthalic acid units contained in the aromatic polyamide to the total number of aminocarboxylic acid units and dicarboxylic acid units contained in the polyamide resin constituting the first resin layer is 30% by mole or greater and 100% by mole or less, preferably 40% by mole or greater and 90% by mole or less, more preferably 50% by mole or greater and 80% by mole or less, still more preferably 55% by mole or greater and 70% by mole or less, even still more preferably 57% by mole or greater and 70% by mole or less, and particularly preferably 60% by mole or greater and 70% by mole or less. Since "the total number of aminocarboxylic acid units and dicarboxylic acid units contained in the polyamide resin constituting the first resin layer" denotes the amount of all polyamide resins constituting the first resin layer as described above, "the ratio of the number of isophthalic acid units contained in the aromatic polyamide to the total number of aminocarboxylic acid units and dicarboxylic acid units contained in the polyamide resin constituting the first resin layer" is an index indicating the proportion of the isophthalic acid units in all the polyamide resins constituting the first resin layer.

A method of theoretically calculating the ratio of the number of isophthalic acid units contained in the aromatic polyamide to the total number of aminocarboxylic acid units and dicarboxylic acid units contained in the polyamide resin constituting the first resin layer will be described with examples.

First, a case where the polyamide resin constituting the first resin layer consists entirely of polyamide 6I/6T (a copolymer of 1,6-hexanediamine and a mixture of isophthalic acid and terephthalic acid) and the molar ratio of the isophthalic acid to the terephthalic acid in the polyamide 6I/6T is 7:3 will be described. In this case, since the polyamide resin contains no aminocarboxylic acid units, the ratio of the number of isophthalic acid units contained in the aromatic polyamide to the total number of aminocarboxylic acid units and dicarboxylic acid units contained in the polyamide resin constituting the first resin layer is calculated as "$7/(7 + 3) \times 100 = 70\%$ by mole".

The following describes a case where the polyamide resin constituting the first resin layer consists of 10% by mass of MXD6 (a copolymer of m-xylylenediamine and adipic acid) and 90% by mass of polyamide 6I (a copolymer of 1,6-hexanediamine and isophthalic acid). In this case, the polyamide resin contains no aminocarboxylic acid units. MXD6 contains m-xylylenediamine units ($-NH-CH_2-C_6H_4-CH_2-NH-$, molecular weight: 134) as the diamine units and adipic acid units ($-CO-(CH_2)_4-CO-$, molecular weight: 112) as the dicarboxylic acid units in equal numbers. Polyamide 6I contains 1,6-hexanediamine units ($-NH-(CH_2)_6-NH-$, molecular weight: 114) as the amine units and isophthalic acid units ($-CO-C_6H_4-CO-$, molecular weight: 132) as the dicarboxylic acid units in equal numbers. Therefore, the ratio of the number of isophthalic acid units contained in the aromatic polyamide to the total number of aminocarboxylic acid units and dicarboxylic acid units contained in the polyamide resin constituting the first resin layer is calculated as "{90/(114 + 132)} / [{10/(134 +112)} + {90/(114 +132)}] $\times$ 100 = 90% by mole".

When the ratio of the number of isophthalic acid units contained in the aromatic polyamide to the total number of aminocarboxylic acid units and dicarboxylic acid units contained in the polyamide resin constituting the first resin layer is greater than or equal to the lower limit, the film-forming properties of the polymer film are improved. When the ratio of the number of isophthalic acid units contained in the aromatic polyamide to the total number of aminocarboxylic acid units and dicarboxylic acid units contained in the polyamide resin constituting the first resin layer is less than or equal to the upper limit, the production cost can be reduced.

Further, when the ratio of the number of dicarboxylic acid units contained in the aromatic polyamide to the total number of aminocarboxylic acid units and dicarboxylic acid units contained in the polyamide resin constituting the first resin layer is greater than or equal to the lower limit, and the ratio of the number of isophthalic acid units contained in the aromatic polyamide to the total number of aminocarboxylic acid units and dicarboxylic acid units contained in the polyamide resin constituting the first resin layer is greater than or equal to the lower limit, the surface of the first resin layer, that is, one outermost surface of the polymer film 10 can be made smooth. When the surface of the first resin layer in the polymer film 10 is made smooth, the migration of the material used for the vapor-deposited film is promoted on the first resin layer during vapor deposition, the adhesive strength between the first resin layer and the vapor-deposited film is increased, and a vapor-deposited film composed of a dense continuous layer with few gaps and excellent flexibility can be obtained. As a result, high gas barrier properties can be obtained.

The surface smoothness of the polymer film 10 is expressed by the surface roughness Sa. A lower surface roughness Sa indicates a smoother surface.

The surface roughness Sa of one outermost surface of the polymer film 10 is preferably 0.10 $\mu$m or less, more preferably 0.07 $\mu$m or less, and still more preferably 0.05 $\mu$m or less, and is preferably 0.01 $\mu$m or greater, more preferably 0.02 $\mu$m or greater, and still more preferably 0.03 $\mu$m or greater. For example, the surface roughness Sa of one outermost surface of the polymer film 10 is preferably 0.01 $\mu$m or greater and 0.10 $\mu$m or less, more preferably 0.02 $\mu$m or greater and 0.07 $\mu$m or less, and still more preferably 0.03 $\mu$m or greater and 0.05 $\mu$m or less.

The surface roughness Sa of the other outermost surface of the polymer film 10 is preferably 0.20 $\mu$m or less, more preferably 0.17 $\mu$m or less, still more preferably 0.14 $\mu$m or less, and is preferably 0.05 $\mu$m or greater, more preferably 0.07 $\mu$m or greater, and still more preferably 0.09 $\mu$m or greater. For example, the surface roughness Sa of the other outermost surface of the polymer film 10 is preferably 0.05 $\mu$m or greater and 0.20 $\mu$m or less, more preferably 0.07 $\mu$m or greater and 0.17 $\mu$m or less, and still more preferably 0.09 $\mu$m or greater and 0.14 $\mu$m or less. As the surface roughness Sa of the other outermost surface of the polymer film 10 increases, the other outermost surface of the polymer film 10 becomes rougher, and a blocking phenomenon in which the other outermost layer adheres to the one outermost layer when the polymer film 10 is wound into a roll shape can be suppressed. Further, in a case where the blocking phenomenon is suppressed, wrinkles are unlikely to occur when the polymer film is wound after film formation.

In practice, "the ratio of the number of dicarboxylic acid units contained in the aromatic polyamide to the total number of aminocarboxylic acid units and dicarboxylic acid units contained in the polyamide resin constituting the first resin layer" and "the ratio of the number of isophthalic acid units contained in the aromatic polyamide to the total number of aminocarboxylic acid units and dicarboxylic acid units contained in the polyamide resin constituting the first resin layer" are determined from the measurement results of $^1$H-NMR spectra. Specifically, "the ratio of the number of dicarboxylic acid units contained in the aromatic polyamide to the total number of aminocarboxylic acid units and dicarboxylic acid units contained in the polyamide resin constituting the first resin layer" and "the ratio of the number of isophthalic acid units contained in the aromatic polyamide to the total number of aminocarboxylic acid units and dicarboxylic acid units contained in the polyamide resin constituting the first resin layer" can be determined by measuring the $^1$H-NMR spectra and calculating the ratio of the number of aminocarboxylic acid units in the first resin layer and the ratio of the number of dicarboxylic acid units contained in the first resin layer.

The protons from which peaks observed by the measurement of the $^1$H-NMR spectra are derived can be specified by comparing with the measurement results of $^1$H-NMR spectra of known polyamide resins. The ratio of the number of aminocarboxylic acid units in the first resin layer and the ratio of the number of dicarboxylic acid units can be determined from the area ratio of each peak.

When the $^1$H-NMR spectrum is measured using a measurement sample prepared from the polymer film, the $^1$H-NMR spectrum is measured as follows.

The polymer film is cut into small pieces with scissors and placed in a sample vial. 6 mL of chloroform and 4 mL of formic acid are added to the sample vial, and the mixture is allowed to stand overnight. In this manner, the first resin layer constituting the polymer film is dissolved in the mixed solvent of chloroform and formic acid.

The organic solvent phase is filtered through a chromatodisc having a filter pore size of 0.45 μm, concentrated, dried, and solidified using a nitrogen blowing device, and used as a measurement sample.

20 to 30 mg of the measurement sample is dissolved in a mixed solvent of 0.5 mL of deuterated chloroform ($CDCl_3$) and 0.5 mL of formic acid, and the solution is transferred to an NMR sample tube.

The $^1$H-NMR spectrum is measured using an NMR device (AVANCE III HD 400 MHz, manufactured by Bruker Japan Co., Ltd.) under the following measurement conditions.

(Measurement conditions)

· Observed nucleus: $^1$H

· Measurement temperature: room temperature

· Number of scans: 32 scans

· Relaxation delay: 5 s

· Probe: PA BBO 400S1 BBF-H-D-05 Z SP

· Deuterated solvent: $CDCl_3$ (internal standard: TMS) + formic acid

· Window function: exponential

· Line broadening: 0.3 Hz

When the $^1$H-NMR spectrum is measured using a measurement sample prepared from the barrier film, the $^1$H-NMR spectrum is measured in the same manner as in the measurement of the $^1$H-NMR spectrum using the measurement sample prepared from the polymer film.

When the $^1$H-NMR spectrum is measured using a measurement sample prepared from a laminate, the $^1$H-NMR spectrum is measured as follows.

The laminate is cut into pieces with scissors, subjected to a freeze-grinding treatment, and placed in a sample vial. A mixed solvent of chloroform and formic acid at a ratio of 1:1 is added to the sample vial, and the mixture is sonicated using an ultrasonic cleaner for 10 minutes and allowed to stand overnight.

The organic solvent phase is filtered through a chromatodisc having a filter pore size of 0.45 μm, concentrated, dried, and solidified using a nitrogen blowing device. 10 mL of chloroform is added to the dried substance, and the resultant is sonicated using an ultrasonic cleaner for 2 to 3 minutes. The resultant is filtered through 5C filter paper, and the residue is cleaned using chloroform.

The residue is dried along with the 5C filter paper under nitrogen blow, and dissolved in formic acid to recover the filtrate. The recovered filtrate is dried under nitrogen blow and used as a measurement sample.

Thereafter, the $^1$H-NMR spectrum is measured in the same manner as described above.

The first resin layer may contain one or two or more types of polyamide resins. When the first resin layer contains one type of polyamide resin, the ratio of the number of isophthalic acid units contained in the aromatic polyamide to the total number of aminocarboxylic acid units and dicarboxylic acid units contained in the polyamide resin constituting the first resin layer can be adjusted to be in the above-described range by appropriately adjusting the type and the ratio of the monomers used for the synthesis of the polyamide resin. For example, the ratio of the number of isophthalic acid units contained in the aromatic polyamide to the total number of aminocarboxylic acid units and dicarboxylic acid units contained in the polyamide resin constituting the first resin layer can be adjusted to 30% by mole or greater by forming the first resin layer with an aromatic polyamide obtained by polycondensing a dicarboxylic acid containing 30% by mole or greater of isophthalic acid and an optional diamine.

Further, the ratio of the number of isophthalic acid units contained in the aromatic polyamide to the total number of aminocarboxylic acid units and dicarboxylic acid units contained in the polyamide resin constituting the first resin layer may be adjusted to be in the above-described range by forming the first resin layer with a resin composition obtained by mixing two or more types of polyamide resins at an appropriate ratio. From the viewpoint of easily adjusting the ratio of the number of isophthalic acid units contained in the aromatic polyamide to the total number of aminocarboxylic acid units and dicarboxylic acid units contained in the polyamide resin constituting the first resin layer, the first resin layer preferably contains two or more types of polyamides.

When the first resin layer contains one type of polyamide resin, the content of the polyamide resin in the first resin layer is preferably 70% by mass or greater, more preferably 80% by mass or greater, and still more preferably 90% by mass or greater. When the first resin layer contains one type of polyamide resin, the upper limit of the content of the polyamide resin in the first resin layer is 100% by mass and particularly preferably substantially 100% by mass. For example, when the first resin layer contains one type of polyamide resin, the content of the polyamide resin in the first resin layer is preferably 70% by mass or greater and 100% by mass or less, more preferably 80% by mass or greater and 100% by mass or less, and still more preferably 90% by mass or greater and 100% by mass or less.

In the present specification, since the first resin layer contains an aromatic polyamide as the polyamide resin, the polyamide resin is an aromatic polyamide when the first resin layer contains one type of polyamide resin. Specific examples of the aromatic polyamide are as described above.

Further, when the first resin layer contains one type of polyamide resin, the polyamide resin may be an amorphous aromatic polyamide or a crystalline aromatic polyamide. Among these, the polyamide resin is preferably an amorphous aromatic polyamide.

Examples of the amorphous aromatic polyamide include a copolymer of 1,6-hexanediamine and isophthalic acid, a copolymer of m-xylylenediamine and isophthalic acid, a copolymer of 1,6-hexanediamine, isophthalic acid, and terephthalic acid, a copolymer of m-xylylenediamine, adipic acid, and isophthalic acid, a copolymer of 2-methyl-1,5-pentanediamine, isophthalic acid, and terephthalic acid, and a copolymer of 2,2,4-trimethylhexamethylenediamine and terephthalic acid.

Examples of the copolymer of 1,6-hexanediamine, isophthalic acid, and terephthalic acid include a copolymer of 1,6-hexanediamine and a dicarboxylic acid in which the molar ratio of isophthalic acid to terephthalic acid is 7:3 and a copolymer of 1,6-hexanediamine and a dicarboxylic acid in which the molar ratio of isophthalic acid to the terephthalic acid is 1:1. Examples of the copolymer of m-xylylenediamine, adipic acid, and isophthalic acid include a copolymer of m-xylylenediamine and a dicarboxylic acid in which the molar ratio of adipic acid to isophthalic acid is 1:1. Examples of the copolymer of 2-methyl-1,5-pentanediamine, isophthalic acid, and terephthalic acid include a copolymer of 2-methyl-1,5-pentanediamine and a dicarboxylic acid in which the molar ratio of isophthalic acid to terephthalic acid is 7:3.

Examples of the crystalline aromatic polyamide include a copolymer of m-xylylenediamine and adipic acid and a copolymer of m-xylylenediamine, adipic acid, and isophthalic acid.

Examples of the copolymer of m-xylylenediamine, adipic acid, and isophthalic acid include a copolymer of m-xylylenediamine and a dicarboxylic acid in which the molar ratio of adipic acid to isophthalic acid is 93:7 and a copolymer of m-xylylenediamine and a dicarboxylic acid in which the molar ratio of adipic acid to isophthalic acid is 8:2.

In the present disclosure, the amorphous polyamide refers to a polyamide that does not have a clear melting point, and specifically a polyamide having a crystalline melting enthalpy $\Delta Hm$ of 5 J/g or less. The crystalline melting enthalpy thereof is preferably 3 J/g or less and more preferably 1 J/g or less.

In the present disclosure, the crystalline polyamide refers to a polyamide having a clear melting point, and specifically a polyamide having a crystalline melting enthalpy $\Delta Hm$ of greater than 5 J/g.

The crystalline melting enthalpy thereof is obtained by differential scanning calorimetry (DSC) in conformity with JIS K 7121:2012 and JIS K 7122:2012.

The following describes a case where the polyamide resin contained in the first resin layer consists of two types, a first polyamide and a second polyamide.

In the present disclosure, since the first resin layer contains an aromatic polyamide as the polyamide resin, the first polyamide is an aromatic polyamide. Further, the first polyamide may be an amorphous aromatic polyamide or a crystalline aromatic polyamide.

The second polyamide may be an aromatic polyamide or an aliphatic polyamide. Further, the second polyamide may be an amorphous aromatic polyamide or a crystalline aromatic polyamide.

Specific examples of the aromatic polyamide, the aliphatic polyamide, the amorphous aromatic polyamide, and the crystalline aromatic polyamide are as described above.

When the polyamide resin contained in the first resin layer consists of two types, the first polyamide and the second polyamide, the content of the first polyamide in the first resin layer is preferably 76% by mass or greater, more preferably 80% by mass or greater, still more preferably 82% by mass or greater, and is preferably less than 100% by mass, more preferably 95% by mass or less, still more preferably 90% by mass or less, and even still more preferably 86% by mass or less. In this case, the first polyamide is preferably an amorphous aromatic polyamide.

When the polyamide resin contained in the first resin layer consists of two types, the first polyamide and the second polyamide, the content of the second polyamide in the first resin layer is preferably greater than 0% by mass, more preferably 5% by mass or greater, still more preferably 10% by mass or greater, even still more preferably 14% by mass or greater, and is preferably 24% by mass or less, more preferably 20% by mass or less, and still more preferably 18% by mass or less. In this case, the second polyamide is preferably a crystalline aromatic polyamide or a crystalline aliphatic polyamide.

For example, a case where the content of the first polyamide in the first resin layer is 76% by mass or greater and less than 100% by mass and the content of the second polyamide in the first resin layer is greater than 0% by mass and 24% by mass or less is preferable, a case where the content of the first polyamide in the first resin layer is 80% by mass or greater and 95% by mass or less and the content of the second polyamide in the first resin layer is 5% by mass or greater and 20% by mass or less is more preferable, a case where the content of the first polyamide in the first resin layer is 82% by mass or greater and 90% by mass or less and the content of the second polyamide in the first resin layer is 10% by mass or greater and 18% by mass or less is still more preferable, and a case where the content of the first polyamide in the first resin layer is 82% by mass or greater and 86% by mass or less and the content of the second polyamide in the first resin layer is 14% by mass or greater and 18% by mass or less is even still more preferable.

Further, the total content of the first polyamide and the second polyamide in the first resin layer may be 100% by mass.

The first resin layer 11 can contain an additive. Examples of the additive include a crosslinking agent, an antioxidant, an anti-blocking agent, a lubricant, an ultraviolet absorber, a light stabilizer, a filler, a reinforcing agent, an antistatic agent, a pigment, and a modifying resin.

The ratio of the thickness of the first resin layer 11 to the total thickness of the polymer film 10 is preferably 1% or greater. In this manner, the gas barrier properties of the polymer film 10 can be improved due to the high gas barrier properties of the first resin layer 11, the adhesion of the first resin layer 11 to the vapor-deposited film 15 is enhanced, and the gas barrier properties can be further improved. Further, the ratio of the thickness of the first resin layer 11 to the total thickness of the polymer film 10 is preferably 10% or less and more preferably 5% or less. In this manner, the film-forming properties and the processability of the polymer film 10 can be further improved, and the proportion of the constituent materials other than polypropylene in the polymer film 10 can be reduced, thereby improving the recyclability.

The thickness of the first resin layer 11 is preferably 0.1 μm or greater, more preferably 0.4 μm or greater, and still more preferably 0.5 μm or greater. In this manner, the gas barrier properties of the polymer film 10 can be improved due to the high gas barrier properties of the first resin layer 11, the adhesion of the first resin layer 11 to the vapor-deposited film 15 is increased, and the gas barrier properties can be further improved. Further, the thickness of the first resin layer is preferably 5 μm or less, more preferably 4 μm or less, still more preferably 2 μm or less, and even still more preferably 1.5 μm or less. In this manner, the proportion of the constituent materials other than polypropylene in the polymer film 10 can be suppressed, thereby improving the recyclability.

For example, the thickness of the first resin layer 11 is preferably 0.1 μm or greater and 5 μm or less, more preferably 0.4 μm or greater and 4 μm or less, still more preferably 0.4 μm or greater and 2 μm or less, and even still more preferably 0.5 μm or greater and 1.5 μm or less.

The first resin layer 11 may be subjected to a surface treatment. In this manner, the adhesion of the first resin layer 11 to the vapor-deposited film 15 can be improved. The method for the surface treatment is not particularly limited, and examples thereof include a physical treatment such as a corona discharge treatment, an ozone treatment, a low-temperature plasma treatment using one or more types selected from the group consisting of argon gas, oxygen gas, and nitrogen gas, or a glow discharge treatment, and a chemical treatment such as an oxidation treatment using chemicals.

(Third resin layer)

The third resin layer 13 includes a polypropylene resin layer, which may be a single layer or a multilayer including a regrind layer. When the third resin layer 13 includes a polypropylene resin layer, the heat resistance can be imparted to the polymer film 10.

The main component of the polypropylene contained in the polypropylene resin layer is homopolypropylene, but the polypropylene may contain a polypropylene random copolymer and a polypropylene block copolymer. The polypropylene may contain a polypropylene random copolymer and a polypropylene block copolymer as a layer or a mixture. The homopolypropylene refers to a polymer consisting only of propylene, and the polypropylene random copolymer refers to a random copolymer of propylene and olefins (for example, ethylene, 1-butene, 1-pentene, 4-methyl-1-pentene, 1-hexene, and 1-octene) other than polypropylene. The polypropylene block copolymer refers to a copolymer having a polymer block composed of propylene and a polymer block composed of an olefin other than the propylene.

The content of the homopolypropylene in the third resin layer 13 is preferably 51% by mass or greater, more preferably 60% by mass or greater, and still more preferably 70% by mass or greater.

In order to impart satisfactory transparency to the third resin layer 13, a random copolymer may be added to the third resin layer 13 in addition to homo polypropylene. In a case where a packaging bag is prepared using a laminate obtained by laminating other films on the barrier film, it is preferable to use only homopolypropylene when prioritizing the rigidity and the heat resistance, and to add a polypropylene random copolymer and/or a polypropylene block copolymer to homopolypropylene or use a polypropylene random copolymer and/or a polypropylene block copolymer when prioritizing the impact resistance and the like. Further, biomass-derived polypropylene and mechanically or chemically recycled polypropylene can also be used.

The first resin layer 11 preferably contains no polypropylene. However, the second resin layer 12 and the third resin layer contain polypropylene, and the content of polypropylene in the polymer film 10 is preferably 70% by mass or greater, more preferably 80% by mass or greater, and still more preferably 90% by mass or greater. In this manner, the recyclability of the polymer film can be improved.

The third resin layer 13 may contain a resin material other than polypropylene within a range where the properties of the present disclosure are not impaired. Examples of the resin material other than polypropylene include a polyolefin such as polyethylene, a (meth)acrylic resin, a vinyl resin, a cellulose resin, a polyamide resin, polyester, and an ionomer resin.

The third resin layer 13 can contain an additive within a range where the properties of the present disclosure are not impaired. Examples of the additive include a crosslinking agent, an antioxidant, an anti-blocking agent, a lubricant, an ultraviolet absorber, a light stabilizer, a filler, a reinforcing agent, an antistatic agent, a pigment, and a modifying resin serving as a compatibilizing agent.

The thickness of the third resin layer 13 is preferably 10 $\mu$m or greater and more preferably 15 $\mu$m or greater. In this manner, the strength and the heat resistance of the polymer film 10 can be further improved. Further, the thickness of the third resin layer 13 is preferably 50 $\mu$m or less, more preferably 40 $\mu$m or less, and still more preferably 30 $\mu$m or less. In this manner, the film-forming properties, the processability, and the productivity of the polymer film 10 can be further improved.

For example, the thickness of the third resin layer 13 is preferably 10 $\mu$m or greater and 50 $\mu$m or less, more preferably 15 $\mu$m or greater and 40 $\mu$m or less, and still more preferably 15 $\mu$m or greater and 30 $\mu$m or less.

(Second resin layer)

The second resin layer 12 contains an acid-modified product of polypropylene. The acid-modified product of polypropylene is a resin exhibiting high adhesion. Since the second resin layer 12 contains an acid-modified product of polypropylene, the polyamide of the first resin layer 11 and the polypropylene of the third resin layer adhere to each other, and thus the interlayer adhesion between the first resin layer 11 and the third resin layer 13 can be improved. Further, the acid-modified product of polypropylene is a polypropylene-based resin similar to homopolypropylene serving as a constituent material of the third resin layer 13, and thus the recyclability of the polymer film 10 can be improved by employing the acid-modified product of polypropylene as the resin constituting the second resin layer 12.

The acid-modified product of polypropylene is a product obtained by graft-polymerizing an unsaturated compound containing one or more carboxylic acid groups, an ester of an unsaturated carboxylic acid compound containing a carboxylic acid group with an alkyl alcohol, or an unsaturated compound containing one or more carboxylic anhydride groups, onto polypropylene. The graft polymerization ratio is preferably 1% by mole or greater and 2% by mole or less. Further, the polymer film 10 is more preferably a stretched film with a graft polymerization ratio of 1% by mole or greater and 2% by mole or less.

Examples of the unsaturated group include a vinyl group, a vinylene group, and an unsaturated cyclic hydrocarbon group. Further, the unsaturated compound containing a carboxylic acid group can be used alone or in combination of two or more types thereof. Examples thereof include an unsaturated carboxylic acid such as acrylic acid, methacrylic acid, maleic acid, fumaric acid, tetrahydrophthalic acid, itaconic acid, citraconic acid, crotonic acid, nadic acid, or cis-endo-bicyclo[2,2,1]hept-5-ene-2,3-dicarboxylic acid. Maleic anhydride is suitable as the unsaturated compound containing one or more carboxylic anhydride groups.

In the acid-modified product of polypropylene, the acid-modified polypropylene is homopolypropylene, a polypropylene random copolymer, or a polypropylene block copolymer, and a plurality of these may be used. Further, these acid-modified products may be mixed with each other. Particularly, the main component is preferably a polypropylene random copolymer. The polypropylene random copolymer is a random copolymer of propylene and an olefin other than propylene. The polypropylene block copolymer is a copolymer having a polymer block composed of propylene and a polymer block composed of an olefin other than the propylene.

A commercially available product can be used as the acid-modified product of polypropylene. Examples thereof include ADMER series (manufactured by Mitsui Chemicals, Inc.) and MODIC series (manufactured by Mitsubishi Chemical Corporation).

The thickness of the second resin layer 12 is preferably 0.2 $\mu$m or greater and more preferably 0.5 $\mu$m or greater. In this manner, the adhesion of the second resin layer 12 to the first resin layer 11 and the third resin layer 13 can be further improved. In addition, the thickness of the second resin layer 12 is preferably 15 $\mu$m or less, more preferably 5 $\mu$m or less, and still more preferably 2 $\mu$m or less. In this manner, the processability of the polymer film 10 can be improved.

For example, the thickness of the second resin layer 12 is preferably 0.2 $\mu$m or greater and 15 $\mu$m or less, more preferably 0.5 $\mu$m or greater and 5 $\mu$m or less, and still more preferably 0.5 $\mu$m or greater and 2 $\mu$m or less.

The ratio of the thickness of the second resin layer 12 to the total thickness of the polymer film 10 is preferably 1% or greater and more preferably 2.5% or greater. In this manner, the adhesion of the second resin layer 12 to the first resin layer 11 and the third resin layer 13 can be improved. Further, the ratio of the thickness of the second resin layer 12 to the total thickness of the polymer film 10 is preferably 20% or less and more preferably 10% or less. In this manner, the processability can be improved, and costs can be reduced.

For example, the ratio of the thickness of the second resin layer 12 to the total thickness of the polymer film 10 is preferably 1% or greater and 20% or less and more preferably 2.5% or greater and 10% or less.

The second resin layer 12 contains an acid-modified product of polypropylene, and may be formed such that a layer containing an acid-modified product of polypropylene is provided on the first resin layer 11 side and a layer mainly composed of a polypropylene random copolymer containing no acid-modified product may be provided on the third resin layer 13 side. The adhesion of the second resin layer 12 to the first resin layer 11 is enhanced by allowing the layer on the first resin layer 11 side to contain an acid-modified product as a main component, and the second resin layer 12 adheres to the third resin layer 13 by providing a layer containing no acid-modified product on the third resin layer 13 side. In this manner, the amount of the acid-modified product to be used can be reduced, thereby achieving cost reduction. The second resin layer 12 can have a total thickness of $0.2\ \mu m$ or greater and $15\ \mu m$ or less by setting the thickness of the layer containing an acid-modified product of polypropylene as a main component to $0.1\ \mu m$ or greater and $5\ \mu m$ or less and setting the thickness of the layer of polypropylene containing no acid-modified product to $0.1\ \mu m$ or greater and $14.9\ \mu m$ or less.

(Fourth resin layer)

As shown in Fig. 2, the polymer film 10 can be provided with the fourth resin layer 14 on a side of the third resin layer 13 of the polymer film 10 opposite to the second resin layer 12. The fourth resin layer 14 contains a copolymer of propylene and an olefin other than propylene. Examples of the copolymer of propylene and an olefin other than propylene include a polypropylene random copolymer. The polypropylene random copolymer refers to a random copolymer of propylene and an olefin other than propylene (for example, ethylene, 1-butene, 1-pentene, 4-methyl-1-pentene, 1-hexene, or 1-octene). Examples of the random copolymer include an ethylene-propylene random copolymer and an ethylene-1-butene-propylene random copolymer. The fourth resin layer 14 may further contain one or more types selected from the group consisting of homopolypropylene, a polypropylene block copolymer, and polyethylene in addition to the copolymer of propylene and an olefin other than propylene. Among these, the fourth resin layer 14 further contains preferably polyethylene and more preferably high-density polyethylene. When the fourth resin layer 14 further contains polyethylene in addition to the copolymer of propylene and an olefin other than propylene, the surface roughness Sa of the other outermost surface of the polymer film 10 can be increased. The content of the copolymer of propylene and an olefin other than propylene in the fourth resin layer 14 is preferably 51% by mass or greater, more preferably 60% by mass or greater, still more preferably 70% by mass or greater, and even still more preferably 95% by mass or greater. In this manner, sufficient impact strength can be obtained. Further, the upper limit of the content of the copolymer of propylene and an olefin other than propylene in the fourth resin layer 14 is 100% by mass and particularly preferably substantially 100% by mass. For example, the content of the copolymer of propylene and an olefin other than propylene in the fourth resin layer 14 is preferably 51% by mass or greater and 100% by mass or less, more preferably 60% by mass or greater and 100% by mass or less, still more preferably 70% by mass or greater and 100% by mass or less, and even still more preferably 95% by mass or greater and 100% by mass or less.

The thickness of the fourth resin layer 14 is preferably $0.2\ \mu m$ or greater and more preferably $0.4\ \mu m$ or greater. In this manner, the drop impact strength can be enhanced. Further, the thickness of the fourth resin layer 14 is preferably $15\ \mu m$ or less, more preferably $5\ \mu m$ or less, and still more preferably $2\ \mu m$ or less. In this manner, the processability of the polymer film 10 can be improved.

For example, the thickness of the fourth resin layer 14 is preferably $0.2\ \mu m$ or greater and $15\ \mu m$ or less, more preferably $0.4\ \mu m$ or greater and $5\ \mu m$ or less, and still more preferably $0.4\ \mu m$ or greater and $2\ \mu m$ or less.

The ratio of the thickness of the fourth resin layer 14 to the total thickness of the polymer film 10 is preferably 1% or greater and more preferably 2% or greater. In this manner, the drop impact strength can be enhanced. Further, the ratio of the thickness of the fourth resin layer 14 to the total thickness of the polymer film 10 is preferably 20% or less and more preferably 10% or less. In this manner, the processability can be improved, and sufficient rigidity can be imparted to the polymer film 10.

For example, the ratio of the thickness of the fourth resin layer 14 to the total thickness of the polymer film 10 is preferably 1% or greater and 20% or less and more preferably 2% or greater and 10% or less.

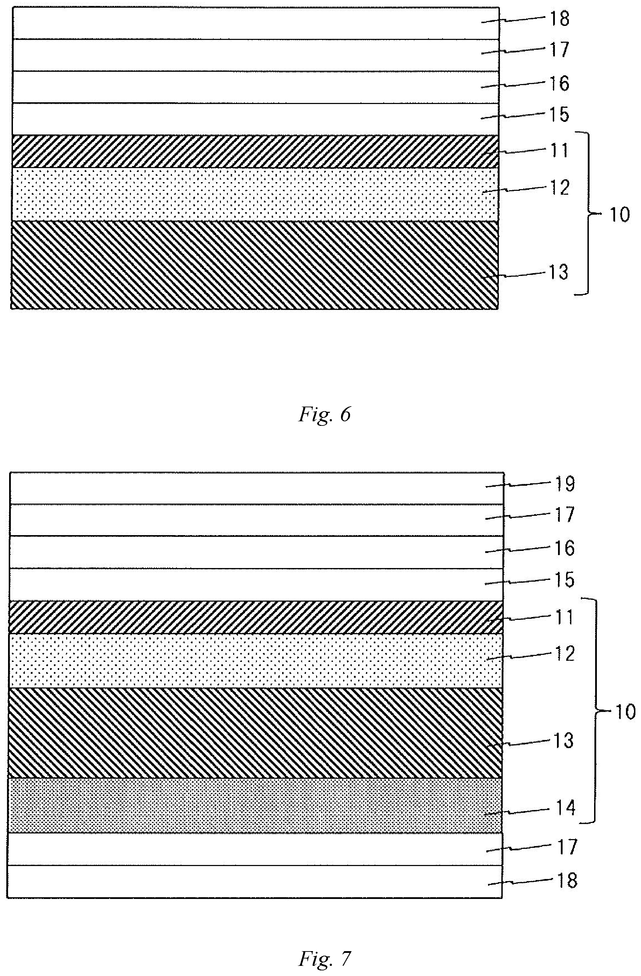

As shown in Fig. 6, the polymer film 10 without the fourth resin layer 14 is formed into a laminate by laminating a heat-sealable heat sealant film 18 containing another polypropylene on the vapor-deposited film 15 side. The heat sealant film 18 of the obtained laminate is heat-sealed to form a packaging bag, and the packaging bag is filled with contents and sealed.

A laminate having a structure in which the polymer film 10 provided with the vapor-deposited film 15 and not provided with the fourth resin layer 14 is sandwiched between two other films is also contemplated. In this case, a laminate is obtained by laminating a polypropylene base material film 19 containing polypropylene on the vapor-deposited film 15 side and laminating the heat sealant film 18 containing polypropylene on the third resin layer 13 side. The heat sealant film 18 is heat-sealed to form a packaging bag, and the packaging bag is filled with contents and sealed. This packaging bag may rupture due to drop impact.

As shown in Fig. 7, a laminate can also be formed by laminating three types of films, in which the polypropylene base material film 19 containing polypropylene is laminated onto the vapor-deposited film 15 side of the barrier film which includes the vapor-deposited film 15 on the first resin layer 11 side of the polymer film 10 provided with the fourth resin layer 14, and the heat sealant film 18 containing polypropylene is laminated onto the third resin layer 13 side. Rupture of the prepared packaging bag caused by drop impact can be prevented by using this laminate as a packaging material.

In a case where the third resin layer 13 contains homopolypropylene as a main component, the high crystallinity of the homopolymer and lamellar crystal formation may cause cohesive failure between lamellar crystals due to impact. The polypropylene random copolymer exhibits low crystallinity and polymer entanglement, which is considered to result in less cohesive failure due to impact.

The content of polypropylene in the polymer film 10 provided with the fourth resin layer 14 is preferably 70% by mass or greater, more preferably 80% by mass or greater, and still more preferably 90% by mass or greater. The content of polypropylene in the polymer film 10 not provided with the fourth resin layer 14 is 70% by mass or greater, more preferably 80% by mass or greater, and still more preferably 90% by mass or greater. In this manner, the recyclability of the polymer film can be improved. The polypropylene may be any one selected from homopolypropylene, a polypropylene random copolymer, a polypropylene block copolymer, and an acid-modified product thereof.

(Production of polymer film 10)

The polymer film 10 is preferably a film subjected to a stretching treatment. The stretching treatment may be uniaxial stretching or biaxial stretching. That is, the polymer film 10 may be a uniaxially stretched film or a biaxially stretched film. The polymer film 10 subjected to the biaxial stretching treatment can be produced, for example, by forming at least the first resin layer 11, the second resin layer 12, and the third resin layer 13 into a sheet through multilayer co-extrusion and stretching the extruded sheet in the machine direction (MD direction) and the transverse direction (TD direction). In a case of the polymer film 10 further provided with the fourth resin layer 14, the first resin layer 11, the second resin layer 12, the third resin layer 13, and the fourth resin layer 14 may be formed into a sheet through multilayer co-extrusion, and the extruded sheet may be stretched in the machine direction and the transverse direction. Stretching in both directions refers to biaxial stretching, and stretching only in the machine direction or the transverse direction refers to uniaxial stretching. Here, biaxial stretching is preferable. The stretching ratio in both the machine direction and the transverse direction is preferably 2 times or greater, more preferably 3 times or greater, and still more preferably 5 times or greater. In this manner, the strength and the heat resistance of the polymer film 10 can be further improved. Further, from the viewpoint of the breaking limit of the polypropylene film, the stretching ratio in both the machine direction and the transverse direction is preferably 15 times or less, more preferably 13 times or less, and still more preferably 10 times or less. The stretching ratio in the transverse direction is preferably greater than the stretching ratio in the machine direction. For example, the stretching ratio in the machine direction may be set to 3 times or greater and 6 times or less, and the stretching ratio in the transverse direction may be set to 8 times or greater and 13 times or less.

The biaxial stretching, which is a type of stretching treatment, may be simultaneous stretching in which stretching is performed in the machine direction and the transverse direction at the same time or sequential stretching in which stretching is performed in the transverse direction after stretching in the machine direction. That is, the polymer film 10 may be a simultaneously biaxially stretched film or a sequentially biaxially stretched film. Since the polymer film 10 can be produced at a low cost using a simple device and has excellent productivity, the polymer film 10 is preferably a sequentially biaxially stretched film.

Since the ratio of the number of isophthalic acid units contained in the aromatic polyamide to the total number of aminocarboxylic acid units and dicarboxylic acid units contained in the polyamide resin constituting the first resin layer 11 is 30% by mole or greater, the crystallization of the resin constituting the first resin layer 11 can be suppressed, the stretching behavior of the first resin layer 11 can be made close to those of the second resin layer 12 and the third resin layer 13, and thus the polymer film 10 can be produced by a sequential stretching method.

Each resin layer may be formed by extruding the same or different resins using a plurality of extruders and merging the resins. The first resin layer 11 may have a multilayer structure formed by extruding different polyamide resins as layers using a plurality of extruders. In the entire first resin layer 11 having a multilayer structure, the ratio of the number of dicarboxylic acid units contained in the aromatic polyamide to the total number of aminocarboxylic acid units and dicarboxylic acid units contained in the polyamide resin and the ratio of the number of isophthalic acid units contained in the aromatic polyamide to the total number of aminocarboxylic acid units and dicarboxylic acid units contained in the polyamide resin may be at certain levels or greater.

As the biaxial stretching method, at least the first resin layer 11, the second resin layer 12, and the third resin layer 13 are formed into a tubular shape through multilayer co-extrusion, and the tubular film may be stretched in the MD direction while being heated and simultaneously stretched in the TD direction by supplying air into the tube.

The third resin layer 13 is extruded, the sheet to be obtained is longitudinally stretched, the first resin layer 11 and the second resin layer 12 are co-extrusion laminated onto the uniaxially stretched third resin layer 13, and then the resulting laminate may be transversely stretched. In this manner, the extrusion device can be simplified, and thus the amount of labor required for maintenance can be reduced. Further, when the widths of the first resin layer 11 and the second resin layer to be laminated onto the third resin layer 13 are set to be less than the width of the third layer 13, the sites to be chucked do not include the first resin layer 11 during transverse stretching, and the recycled material recycled from the chucked sites can be made not to contain polyamide, thereby enhancing the recyclability of the recycling material.

The stretching is preferably performed such that the tensile strength of the polymer film 10 in the transverse direction (TD direction) is greater than the tensile strength in the machine direction (MD direction). By employing such a configuration, high unidirectional tearability can be imparted to the packaging bag to be prepared from the barrier film of the present disclosure. The tensile strength of the polymer film 10 in the transverse direction (TD direction) is preferably 1.05 times or greater, more preferably 1.1 times or greater, and still more preferably 1.2 times or greater the tensile strength thereof in the machine direction (MD direction). For example, the tensile strength of the polymer film 10 in the transverse direction (TD direction) can be set to 200 MPa or greater and 300 MPa or less.

In the present specification, the tensile strength of the polymer film 10 is measured in conformity with JIS K 7127:1999. A tensile tester STA-1150 (manufactured by Orientec Co., Ltd.) can be used as a measuring instrument. The polymer film 10 can be cut into a rectangular film having a width of 15 mm and a length of 150 mm for use as a test specimen. The distance between a pair of chucks holding the test specimen at the start of measurement is 100 mm, and the tensile speed is 300 mm/min. In the present specification, the tensile strength is measured in an environment of a temperature of 23°C and a relative humidity of 50% unless otherwise specified.

The thickness of the polymer film 10 is preferably 10 $\mu$m or greater. In this manner, the polymer film 10 has improved strength and is unlikely to be broken during processing. The thickness of the polymer film 10 is preferably 50 $\mu$m or less. This prevents the polymer film 10 from having strength excessive for the required strength, thereby preventing a waste of resources when the packaging material is obtained by using the polymer film 10.

For example, the thickness of the polymer film 10 is preferably 10 $\mu$m or greater and 50 $\mu$m or less.

In the polymer film 10, it is preferable that the third resin layer 13 have the largest thickness among the first resin layer 11, the second resin layer 12, and the third resin layer 13, and the thickness of each layer constituting the polymer film 10 satisfy Expressions (1) and (2).

$$\text{Thickness of first resin layer 11} \leq (\text{thickness of polymer film 10})/10 \quad (1)$$

$$\text{Thickness of second resin layer 12} \leq (\text{thickness of polymer film 10})/5 \quad (2)$$

Since the third resin layer 13 containing polypropylene is the main component of the polymer film 10 and determines the physical properties of the polymer film 10, the third resin layer 13 preferably has the largest thickness.

Since the polyamide resin contained in the first resin layer 11 is a resin different from polypropylene, and a large amount of the polyamide resin contained in the polymer film 10 interferes with recycling, it is preferable to reduce the amount of the polyamide to be used. Accordingly, the thickness of the first resin layer 11 is preferably 1/10 or less and more preferably 1/13.3 or less of the thickness of the polymer film 10.

The acid-modified product of polypropylene contained in the second resin layer 12 is a polypropylene-based resin, and does not interfere with recycling. However, due to relatively high cost, the amount of the acid-modified product of polypropylene to be used is preferably small, provided that the second resin layer 12 sufficiently adheres to the first resin layer 11 and the third resin layer 13 and the stress from the expansion and contraction of the third resin layer 13 can be absorbed. Accordingly, the thickness of the second resin layer 12 is preferably 1/5 or less of the thickness of the polymer film 10.

In the polymer film 10, the thickness of the first resin layer 11 constituting the polymer film 10 satisfies more preferably Expression (3) and still more preferably Expression (4).

$$(\text{Thickness of polymer film 10})/100 \leq \text{thickness of first resin layer 11} \quad (3)$$

$$(\text{Thickness of polymer film 10})/50 \leq \text{thickness of first resin layer 11} \quad (4)$$

When the thickness of the first resin layer 11 is greater than or equal to the lower limit, the gas barrier properties of the polymer film 10 can be improved by the high gas barrier properties of the first resin layer 11, the adhesion of the first resin layer 11 to the vapor-deposited film 15 can be enhanced, and thus the gas barrier properties can be further improved.

Further, in the polymer film 10, the thickness of the first resin layer 11 constituting the polymer film 10 satisfies preferably Expression (5) and more preferably Expression (6).

$$\text{(Thickness of polymer film 10)}/100 \leq \text{thickness of first resin layer 11} \leq \text{(thickness of polymer film 10)}/10 \qquad (5)$$

$$\text{(Thickness of polymer film 10)}/50 \leq \text{thickness of first resin layer 11} \leq \text{(thickness of polymer film 10)}/13.3 \qquad (6)$$

In the polymer film 10, the thickness of the second resin layer 12 constituting the polymer film 10 more preferably satisfies Expression (7).

$$\text{(Thickness of polymer film 10)}/100 \leq \text{thickness of second resin layer 12} \qquad (7)$$

When the thickness of the second resin layer 12 is greater than or equal to the lower limit, the adhesion of the second resin layer to the first resin layer 11 and the third resin layer 13 can be improved.

Further, in the polymer film 10, the thickness of the second resin layer 12 constituting the polymer film 10 preferably satisfies Expression (8).

$$\text{(Thickness of polymer film 10)}/100 \leq \text{thickness of second resin layer 12} \leq \text{(thickness of polymer film 10)}/5 \qquad (8)$$

(Vapor-deposited film 15)

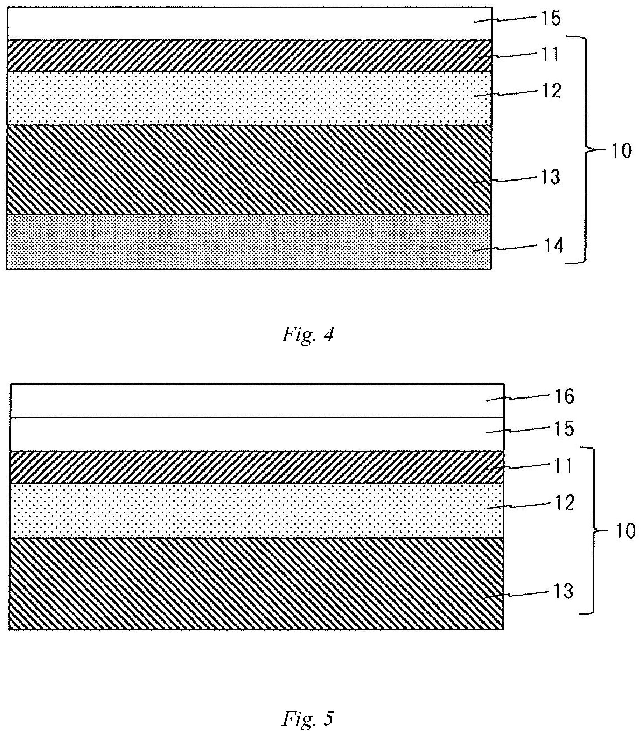

The barrier film of the present disclosure includes the vapor-deposited film 15 containing an inorganic oxide on the first resin layer 11 side of the polymer film 10 as shown in Fig. 3. Further, when the polymer film 10 includes the fourth resin layer 14, the barrier film of the present disclosure includes the vapor-deposited film 15 containing an inorganic oxide on the first resin layer 11 side as shown in Fig. 4. The vapor-deposited film 15 may be formed on the surface of the first resin layer 11. Other layers may be provided between the first resin layer 11 and the vapor-deposited film 15. The formation of the vapor-deposited film 15 imparts the gas barrier properties, specifically oxygen barrier properties and water vapor barrier properties, to the barrier film. Further, the packaging bag including a laminate prepared using the barrier film of the present disclosure can suppress quality deterioration of packaged contents caused by oxidation, degeneration of contents due to evaporation or absorption of water vapor, reduction of the commercial value due to volatilization of aroma components of contents, impact on the environment due to volatilization of aroma components, degeneration of contents, and impact on the atmosphere.

When the packaging bag composed of a laminate including the barrier film provided with an aluminum vapor-deposited film is subjected to a retort treatment, the aluminum vapor-deposited film dissolves from the end surfaces, and the sites where the aluminum vapor-deposited film has dissolved are peeled off. This phenomenon occurs particularly significantly in shower retorting, where hot water is sprayed onto an object to be sterilized. The adhesive strength between the polymer film and the vapor-deposited film is decreased at the sites where the aluminum vapor-deposited film has dissolved, the aluminum vapor-deposited film is peeled from the polymer film, and the gas barrier properties are degraded. In order to prevent such problems from occurring, the vapor-deposited film 15 in the barrier film of the present disclosure contains an inorganic oxide, preferably contains an inorganic oxide as a main component, and more preferably consists of an inorganic oxide.

Examples of the inorganic oxide include aluminum oxide (alumina), silicon oxide (silica), magnesium oxide, calcium oxide, zirconium oxide, titanium oxide, boron oxide, hafnium oxide, barium oxide, and carbon-containing silicon oxide. Among these, silicon oxide, carbon-containing silicon oxide, or aluminum oxide is preferable.

The aluminum oxide may include, in addition to aluminum oxide $AlO_x$ (where x represents a number of 0 or greater and 1.5 or less), aluminum hydroxide oxide $AlO_y(OH)_z$ (where y and z represent numbers satisfying $0 \leq y \leq 1.5$, $0 \leq z \leq 3$, and $2y + z = 3$), and aluminum hydroxide $Al(OH)_3$.

The inorganic oxide is more preferably carbon-containing silicon oxide since the degradation of the gas barrier properties can be suppressed even after the barrier film is flexed.

The thickness of the vapor-deposited film 15 is preferably 3 nm or greater, more preferably 5 nm or greater, and still more preferably 8 nm or greater. In this manner, the oxygen barrier properties and the water vapor barrier properties of the barrier film can be further improved. Further, the thickness of the vapor-deposited film 15 is preferably 150 nm or less, more preferably 60 nm or less, and still more preferably 40 nm or less. In this manner, the occurrence of cracks in the vapor-deposited film 15 can be prevented. Further, in a case where the thickness of the vapor-deposited film 15 is in the above-described ranges, the recyclability of the barrier film when the barrier film is used as a constituent film of the packaging material is not impaired.

For example, the thickness of the vapor-deposited film 15 is preferably 3 nm or greater and 150 nm or less, more preferably 5 nm or greater and 60 nm or less, and still more preferably 8 nm or greater and 40 nm or less.

The vapor-deposited film 15 can be formed by a known method of the related art. Examples of the method of forming the vapor-deposited film 15 include a physical vapor deposition method (PVD method) such as a vacuum evaporation method, a sputtering method, or an ion plating method, and a chemical vapor deposition method (CVD method) such as a plasma chemical vapor deposition method, a thermal vapor deposition method, or a photochemical vapor deposition method.

The vapor-deposited film 15 may be a single layer formed by a vapor deposition step performed once or a multilayer formed by a vapor deposition step performed a plurality of times. When the vapor-deposited film 15 is a multilayer, the respective layers may be made of the same material or different materials. Further, the respective layers may be formed by the same method or different methods.

The vapor-deposited film 15 is formed, and a layer containing an organic substance such as a barrier coating layer 16 described below may be provided on the outer surface of the vapor-deposited film 15. In this manner, high barrier properties can be obtained. Further, a vapor-deposited film and a layer containing an organic substance may be repeatedly laminated by further providing a vapor-deposited film on the surface of the layer containing an organic substance, further providing a layer containing an organic substance on the outer surface of the vapor-deposited film, and the like.

When the inorganic oxide contained in the vapor-deposited film 15 is silicon oxide, the barrier film is preferably not provided with the barrier coating layer 16. That is, the vapor-deposited film 15 preferably constitutes one outermost surface of the barrier film. When the vapor-deposited film 15 is positioned as one outermost surface of the barrier film, a laminate can be prepared by laminating other layers on the vapor-deposited film 15, and wet peel strength described below can be increased compared to a case where the barrier coating layer 16 is provided.

A plasma-assisted vacuum deposition apparatus can be used as an apparatus used in the method of forming a vapor-deposited film by the PVD method. The details of the forming method are disclosed in Japanese Unexamined Patent Application Publication No. 2011-214089.

As a plasma generator used in the plasma chemical vapor deposition method, a high-frequency plasma generator, a pulse plasma generator, a microwave plasma generator, or the like can be used. Further, an apparatus having two or more deposition chambers may be used. The details of the forming method are disclosed in Japanese Unexamined Patent Application Publication No. 2012-076292.

A continuous vapor-deposited film-forming apparatus equipped with a plasma pre-treatment chamber and a deposition chamber can be used as an apparatus used in the method of forming the vapor-deposited film 15. In the plasma pre-treatment chamber, the first resin layer 11 of the polymer film 10 is irradiated with plasma supplied from a plasma supply nozzle. Subsequently, in the deposition chamber, the vapor-deposited film 15 is formed on the first resin layer 11 that has been subjected to a plasma treatment. The details of the forming method are disclosed in International Publication No. WO2019/087960.

The surface of the vapor-deposited film 15 is preferably subjected to a plasma treatment. In this manner, adhesion of the vapor-deposited film to the barrier coating layer 16 provided on the surface of the vapor-deposited film 15 described below can be improved.

When the vapor-deposited film 15 is used as a carbon-containing silicon oxide vapor-deposited film in the barrier film of the present disclosure, the degradation of the gas barrier properties can be suppressed even after the barrier film is flexed. The carbon-containing silicon oxide vapor-deposited film can be formed by the CVD method.

The carbon-containing silicon oxide vapor-deposited film contains silicon, oxygen, and carbon. The proportion of carbon in the carbon-containing silicon oxide vapor-deposited film is preferably 3% or greater, more preferably 5% or greater, and still more preferably 10% or greater, with respect to 100% of the total amount of the three elements of silicon, oxygen, and carbon. The proportion of carbon in the carbon-containing silicon oxide vapor-deposited film is preferably 50% or less, more preferably 40% or less, and still more preferably 35% or less, with respect to 100% of the total amount of the three elements of silicon, oxygen, and carbon. For example, the proportion of carbon in the carbon-containing silicon oxide vapor-deposited film is preferably 3% or greater and 50% or less, more preferably 5% or greater and 40% or less, and still more preferably 10% or greater and 35% or less, with respect to 100% of the total amount of the three elements of silicon, oxygen, and carbon. When a proportion C of carbon in the carbon-containing silicon oxide vapor-deposited film is in the above-described ranges, the degradation of the gas barrier properties can be suppressed even after the barrier film is flexed.

The proportion of carbon is preferably 3% or greater and 50% or less, the proportion of oxygen is preferably 25% or greater and 65% or less, and the proportion of silicon is preferably 25% or greater and 40% or less, with respect to 100% of the total amount of the three elements of carbon, oxygen, and silicon. When the proportion of carbon is 3% or greater, the degradation of the gas barrier properties can be further suppressed even after the barrier film is flexed. When the proportion of carbon is 50% or less, the coloration of the appearance can be suppressed.

(Measurement of proportion of each element in carbon-containing silicon oxide vapor-deposited film)

The proportions of carbon, silicon, and oxygen in the carbon-containing silicon oxide vapor-deposited film can be measured by X-ray photoelectron spectroscopy (XPS) described below.

The narrow spectrum of each element on the surface of the carbon-containing silicon oxide vapor-deposited film is measured using an X-ray photoelectron spectrometer (XPS). Thereafter, the measured surface is etched under the conditions described below to expose a new measurement surface. The narrow spectrum of each element is measured for the exposed measurement surface under the same conditions as described below.

The background of each narrow spectrum of C1s, O1s, and Si2p is subtracted by the Shirley method using analysis software to obtain the integrated intensity (area) of the peak for each element. The proportion (at%) of each element is calculated based on the obtained integrated intensity (area). The proportion of each element after performing etching once for 30 seconds is used to reduce the influence of surface contamination.

<Conditions for measuring X-ray photoelectron spectrum>

Apparatus: ESCA3400 (manufactured by Shimadzu Corporaiton)

X-ray source: Mg Kα

Emission current: 20 mA

Acceleration voltage: 10 kV

Resolution: Low

Measurement area: about 6 mmφ

<Etching conditions>

Ion species: Ar$^+$

Ar gas introduction pressure: $2.0 \times 10^{-2}$ Pa

Emission current: 30 mA

Acceleration voltage: 0.3 kV

Etching time: 30 seconds × once

(Barrier coating layer 16)

In the barrier film according to an embodiment of the present disclosure, the barrier coating layer 16 may be provided on the vapor-deposited film 15 as shown in Fig. 5. The oxygen barrier properties and the water vapor barrier properties of the barrier film are further improved by forming the barrier coating layer 16 on the surface of the vapor-deposited film 15.

In the barrier film according to an embodiment of the present disclosure, although not shown, the barrier coating layer 16 may be provided on the vapor-deposited film 15 when the polymer film 10 includes the fourth resin layer 14. The oxygen barrier properties and the water vapor barrier properties of the barrier film are further improved by forming the barrier coating layer 16 on the surface of the vapor-deposited film 15.

The barrier coating layer 16 contains a gas barrier resin such as an ethylene-vinyl alcohol copolymer (EVOH), polyvinyl alcohol (PVA), polyester, polyurethane, or a (meth)acrylic resin. Among these, polyvinyl alcohol is preferable from the viewpoint of improving the oxygen barrier properties and the water vapor barrier properties. When the barrier coating layer 16 contains polyvinyl alcohol, the occurrence of cracks in the vapor-deposited film 15 can be effectively prevented.

The content of the gas barrier resin in the barrier coating layer 16 is preferably 50% by mass or greater and more preferably 75% by mass or greater. In this manner, the oxygen barrier properties and the water vapor barrier properties can be further improved. Further, the content of the gas barrier resin in the barrier coating layer 16 is 100% by mass or less, preferably 95% by mass or less, and more preferably 90% by mass or less.

For example, the content of the gas barrier resin in the barrier coating layer 16 is preferably 50% by mass or greater and 100% by mass or less, more preferably 50% by mass or greater and 95% by mass or less, and still more preferably 75% by mass or greater and 90% by mass or less.

The thickness of the barrier coating layer 16 is preferably 0.01 μm or greater and more preferably 0.1 μm or greater. In this manner, the oxygen barrier properties and the water vapor barrier properties of the barrier film can be further improved. Further, the thickness of the barrier coating layer 16 is preferably 10 μm or less, more preferably 5 μm or less, and still more preferably 1 μm or less. In this manner, the processability of the barrier film can be improved. Further, when the thickness of the barrier coating layer 16 is in the above-described ranges, the recyclability is not impaired even in a case where a different material other than polypropylene is used.

For example, the thickness of the barrier coating layer 16 is preferably 0.01 μm or greater and 10 μm or less, more preferably 0.1 μm or greater and 5 μm or less, and still more preferably 0.1 μm or greater and 1 μm or less.

The barrier coating layer 16 can be formed by dissolving or dispersing the gas barrier resin in water or an appropriate solvent, and applying and drying the mixture.

The barrier coating layer 16 is preferably a gas barrier coating film containing at least one resin composition of a hydrolyzate of a metal alkoxide or a hydrolysis-condensation product of a metal alkoxide obtained by polycondensing a mixture of a metal alkoxide and a water-soluble polymer by a sol-gel method in the presence of a sol-gel catalyst, water, an organic solvent, or the like. The gas barrier coating film is a gas barrier coating film of a mixture of a metal alkoxide and a water-soluble polymer or a mixture of a metal alkoxide, a water-soluble polymer, and a silane coupling agent. The occurrence of cracks in the vapor-deposited film 15 can be effectively prevented by providing such a barrier coating layer 16 on the vapor-deposited film 15.

The metal alkoxide is represented by the following general formula.

$$R^1{}_nM(OR^2)_m$$

In the formula, $R^1$ and $R^2$ each represent an organic group having 1 or more and 8 or less carbon atoms, M represents a metal atom, n represents an integer of 0 or greater, m represents an integer of 1 or greater, and n + m represents the valence of M.

For example, silicon, zirconium, titanium, aluminum, or the like can be used as the metal atom M. Examples of the organic group represented by $R^1$ and $R^2$ include an alkyl group such as a methyl group, an ethyl group, an n-propyl group, an i-propyl group, an n-butyl group, or an i-butyl group.

Examples of the metal alkoxide satisfying the above-described general formula include tetramethoxysilane ($Si(OCH_3)_4$), tetraethoxysilane ($Si(OC_2H_5)_4$), tetrapropoxysilane ($Si(OC_3H_7)_4$), and tetrabutoxysilane ($Si(OC_4H_9)_4$).

A silane coupling agent may be used along with the metal alkoxide. As the silane coupling agent, a known organic reactive group-containing organoalkoxysilane can be used, and examples thereof include vinyltrimethoxysilane, γ-chloropropylmethyldimethoxysilane, γ-chloropropyltrimethoxysilane, 3-glycidoxypropylmethyldimethoxysilane, 3-glycidoxypropyltrimethoxysilane, 3-glycidoxypropylmethyldiethoxysilane, 3-glycidoxypropylmethyltriethoxysilane, γ-methacryloxypropyltrimethoxysilane, γ-methacryloxypropylmethyldimethoxysilane, and 1,3,5-tris(3-methoxysilylpropyl)isocyanurate.

The silane coupling agent may be used in combination of two or more types thereof, and the content of the silane coupling agent is preferably 1 part by mass or greater and 20 parts by mass or less with respect to 100 parts by mass of the total amount of the metal alkoxide.

Polyvinyl alcohol and an ethylene-vinyl alcohol copolymer are preferable as the water-soluble polymer and preferably used in combination from the viewpoints of oxygen barrier properties, water vapor barrier properties, water resistance, and weather resistance.

The degree of polymerization of the polyvinyl alcohol is preferably 300 or greater. In this manner, the degradation of the gas barrier properties due to flexing can be suppressed. Further, the degree of polymerization of polyvinyl alcohol is preferably 3000 or less. This can suppress the processing from becoming difficult.

For example, the degree of polymerization of the polyvinyl alcohol is preferably 300 or greater and 3000 or less.

The degree of saponification of the polyvinyl alcohol is preferably 90% by mole or greater, more preferably 95% by mole or greater, and still more preferably 99% by mole or greater.

The degree of polymerization of the ethylene-vinyl alcohol copolymer is preferably 300 or greater. In this manner, the degradation of the gas barrier properties due to flexing can be suppressed. Further, the degree of polymerization of the ethylene-vinyl alcohol copolymer is preferably 3000 or less. This suppresses the processing from becoming difficult.

For example, the degree of polymerization of the ethylene-vinyl alcohol copolymer is preferably 300 or greater and 3000 or less.

The degree of saponification of the ethylene-vinyl alcohol copolymer is preferably 90% by mole or greater, more preferably 95% by mole or greater, and still more preferably 99% by mole or greater.

The content of the ethylene unit in the ethylene-vinyl alcohol copolymer is preferably 10% by mole or greater, more preferably 15% by mole or greater, still more preferably 20% by mole or greater, and even still more preferably 25% by mole or greater. Further, the content of the ethylene unit in the ethylene-vinyl alcohol copolymer is 65% by mole or less, more preferably 55% by mole or less, and still more preferably 50% by mole or less. For example, the content of the ethylene unit in the ethylene-vinyl alcohol copolymer is preferably 10% by mole or greater and 65% by mole or less, more preferably 15% by mole or greater and 55% by mole or less, still more preferably 20% by mole or greater and 50% by mole or less, and even still more preferably 25% by mole or greater and 50% by mole or less. Ethylene-vinyl alcohol copolymers having different ethylene contents may be mixed.

The thickness of the gas barrier coating film is preferably 0.01 $\mu$m or greater and more preferably 0.1 $\mu$m or greater. In this manner, the oxygen barrier properties and the water vapor barrier properties of the barrier film can be improved, and the occurrence of cracks in the vapor-deposited film can be prevented. Further, the thickness of the gas barrier coating film is preferably 1 $\mu$m or less and more preferably 0.5 $\mu$m or less. In this manner, the occurrence of cracks in the gas barrier coating film can be suppressed while maintaining the recyclability.

For example, the thickness of the gas barrier coating film is preferably 0.01 $\mu$m or greater and 1 $\mu$m or less and more preferably 0.1 $\mu$m or greater and 0.5 $\mu$m or less.

The gas barrier coating film can be formed by applying a composition containing the above-described materials using a known method of the related art, for example, roll coating such as gravure roll coating, spray coating, spin coating, dipping, brushing, bar coating, or an applicator, and polycondensing the composition using a sol-gel method. As the sol-gel catalyst, an acid or an amine-based compound is suitable.

The above-described composition may contain an organic solvent. For example, methyl alcohol, ethyl alcohol, n-propyl alcohol, isopropyl alcohol, or n-butanol can be used as the organic solvent.

A method of forming the gas barrier coating film will be described below. A composition is prepared by mixing a metal alkoxide, a water-soluble polymer, a sol-gel catalyst, water, an organic solvent, and optionally a silane coupling agent. The polycondensation reaction proceeds in the composition. Next, the composition is applied to the vapor-deposited film 15 by the above-described known method of the related art, and dried. Upon drying the composition, the polycondensation reaction proceeds involving the metal alkoxide, the water-soluble polymer, and, if contained, the silane coupling agent, thereby forming a composite polymer layer. The heating temperature during drying is preferably 20°C or higher, more preferably 50°C or higher, still more preferably 80°C or higher, and is preferably 250°C or lower, more preferably 200°C or lower, and still more preferably 150°C or lower. For example, the heating temperature during drying is preferably 20°C or higher and 250°C or lower, more preferably 50°C or higher and 200°C or lower, and still more preferably 80°C or higher and 150°C or lower. The drying time is preferably 1 second or longer and 10 minutes or shorter.

The barrier coating layer 16 may have a printed layer formed on a surface thereof.

(Laminate)

The barrier film of the present disclosure is formed as a laminate by providing the barrier coating layer 16 on the surface of the vapor-deposited film 15 and laminating other films thereon. As shown in Fig. 5, the barrier coating layer 16 is provided on the surface of the vapor-deposited film 15 of the barrier film, which is provided with the vapor-deposited film 15 on the first resin layer side of the polymer film 10 composed of the first resin layer 11, the second resin layer 12, and the third resin layer 13. Other layers may be laminated on the surface of the vapor-deposited film 15 without providing the barrier coating layer 16.

The barrier film of the present disclosure is formed as a laminate by providing the barrier coating layer 16 on the surface of the vapor-deposited film 15 and laminating other films thereon. Although not shown, the barrier coating layer 16 is provided on the surface of the vapor-deposited film 15 of the barrier film, which is provided with the vapor-deposited film 15 on the first resin layer 11 side of the polymer film 10 composed of the first resin layer 11, the second resin layer 12, the third resin layer 13, and the fourth resin layer 14. Other layers may be laminated on the surface of the vapor-deposited film 15 without providing the barrier coating layer 16.

As shown in Fig. 6, a laminate is formed by laminating a heat-sealable heat sealant film 18 containing polypropylene via an adhesive layer 17 onto the barrier coating layer 16 side of the obtained barrier film including the barrier coating layer 16. The laminate may have a layer configuration of the polymer film 10, the vapor-deposited film 15, the barrier coating layer 16, the adhesive layer 17, and the heat sealant film 18. A printed layer may be provided on the barrier coating layer 16 side. The heat sealant film 18 may be laminated directly onto the barrier coating layer 16 side. In this case, the heat sealant film 18 is laminated without providing the adhesive layer 17.

When the barrier coating layer 16 is not provided, a laminate is formed by laminating a heat-sealable heat sealant film 18 containing polypropylene via an adhesive layer 17 onto the vapor-deposited film 15 side of the barrier film. The laminate may have a layer configuration of the polymer film 10, the vapor-deposited film 15, the adhesive layer 17, and the heat sealant film 18. Further, the heat sealant film 18 may be laminated directly onto the vapor-deposited film 15 side. In this case, the heat sealant film 18 is laminated without providing the adhesive layer 17.

The polypropylene base material film 19 containing polypropylene may be laminated via the adhesive layer 17 onto the vapor-deposited film 15 side of the barrier film, and the heat-sealable heat sealant film 18 containing polypropylene may be laminated via the adhesive layer 17 onto the polypropylene base material film 19. The laminate has the layer configuration of the polymer film 10, the vapor-deposited film 15, the adhesive layer 17, the polypropylene base material film 19, the adhesive layer 17, and the heat sealant film 18. When the barrier coating layer 16 is provided on the vapor-deposited film 15 side, the laminate has the layer configuration of the polymer film 10, the vapor-deposited film 15, the barrier coating layer 16, the adhesive layer 17, the polypropylene base material film 19, the adhesive layer 17, and the heat sealant film 18. A printed layer may be provided on the surface of the barrier coating layer on the vapor-deposited film 15 side. The polypropylene base material film 19 may be a biaxially stretched polypropylene film. Further, the heat sealant film 18 may be laminated directly onto the polypropylene base material film 19. In this case, the heat sealant film 18 is laminated without providing the adhesive layer 17.

A laminate is formed by providing the barrier coating layer 16 on the surface of the vapor-deposited film 15 of the barrier film having the fourth resin layer 14 on the polymer film 10 shown in Fig. 2, and laminating the polypropylene base material film 19 containing polypropylene via the adhesive layer 17 onto the barrier coating layer 16 side and laminating the heat sealant film 18 via the adhesive layer 17 onto the fourth resin layer 14 as shown in Fig. 7. The laminate has the layer configuration of the polypropylene base material film 19, the adhesive layer 17, the barrier coating layer 16, the vapor-deposited film 15, the polymer film 10 including the fourth resin layer 14, the adhesive layer 17, and the heat sealant film 18. When the barrier coating layer 16 is not provided, the polypropylene base material film 19 containing polypropylene is laminated via the adhesive layer 17 onto the vapor-deposited film 15 side. The laminate has the layer configuration of the polypropylene base material film 19, the adhesive layer 17, the vapor-deposited film 15, the polymer film 10 including the fourth resin layer 14, the adhesive layer 17, and the heat sealant film 18. In both cases, the laminate includes the polypropylene base material film 19 on a side of the barrier film opposite to the heat sealant film 18. The polypropylene base material film 19 may be a biaxially stretched polypropylene film. A printed layer may be provided on the polypropylene base material film 19. Further, the heat sealant film 18 may be laminated directly on the fourth resin layer 14. In this case, the heat sealant film 18 is laminated without providing the adhesive layer 17.

The heat sealant film 18 contains, as a main component, polypropylene having a melting point of 120°C or higher. In this manner, the heat resistance of the packaging material can be improved. The polypropylene is not particularly limited as long as the melting point thereof is 120°C or higher. In the present specification, "polyolefin having a melting point of 120°C or higher" refers to polypropylene having a maximum peak temperature of 120°C or higher as measured by DSC.

The heat sealant film 18 preferably contains polyethylene as a sealant material. The heat sealant film 18 can have a sea-island structure formed by containing polyethylene along with polypropylene. The term "sea-island structure" refers to a structure in which polyethylene is discontinuously dispersed in a region of continuous polypropylene.

When the heat sealant film 18 contains a sealant material other than polypropylene, the heat sealant film 18 is not limited to having a sea-island structure and may be in a state where two materials are compatible with each other.

The heat sealant film 18 preferably contains a sealant material having a melting point of 150°C or higher.

General packaging bags for heat sterilization are subjected to a retort treatment or a boiling treatment after being filled with contents, which may result in degradation of gas barrier properties and heat-sealing properties. Since the heat sealant film 18 contains polypropylene having a melting point of 150°C or higher, the laminate of the present disclosure can effectively suppress the degradation of the gas barrier properties and the heat-sealing properties of the packaging bag even when the packaging bag prepared from the laminate is subjected to a heat treatment such as a retort treatment or a boiling treatment.

The retort treatment is a treatment in which a packaging bag for heat sterilization is filled with contents, sealed, and heated under pressure using steam or heated water. The retort treatment is classified into a semi-retort treatment and a high-retort treatment based on the heating temperature. In the semi-retort treatment, for example, the central portion of the contents is held at 121°C for at least 3 minutes after reaching that temperature. In the high-retort treatment, for example, the central portion of the contents is held at 135°C for at least 3 minutes after reaching that temperature.

The boiling treatment is a treatment in which a packaging bag for heat sterilization is filled with contents, sealed, and heated with steam or heated water without being pressurized. In the boiling treatment, for example, the central portion of the contents is held at 90°C for at least 3 minutes after reaching that temperature.

The polypropylene used in the heat sealant film 18 may be any of a homopolymer, a random copolymer, and a block copolymer. Among these, a block copolymer is preferable from the viewpoints of suitability for the retort and boiling treatments. The impact resistance of the packaging bag prepared from the barrier film of the present disclosure can be improved by using a block copolymer. For example, a propylene-ethylene block copolymer can be used as the block copolymer.

The adhesive used in the adhesive layer 17 may be any of a one-component curing type adhesive, a two-component curing type adhesive, or a non-curing type adhesive. Further, the adhesive may be a solvent-free adhesive or a solvent-based adhesive, but a solvent-free adhesive is preferably used from the viewpoint of environmental load. Examples of the solvent-free adhesive include a polyether-based adhesive, a polyester-based adhesive, a silicone-based adhesive, an epoxy-based adhesive, and a urethane-based adhesive. Among these, a two-component curing type urethane-based adhesive is preferably used. The adhesive may be a combination of a polyolefin-modified product and a curing agent. When an adhesive containing a polyolefin-modified product as a main component is used, obstacles to recyclability caused by the adhesive can be reduced.

The thickness of the adhesive layer 17 is not particularly limited, and can be set to, for example, 0.1 $\mu$m or greater and 10 $\mu$m or less.

(Wet peel strength)

In the laminate of the present disclosure, the wet peel strength when a film including the polypropylene base material film and a film including the barrier film and the heat sealant film are peeled off in conformity with JIS K 6854-2:1999 after the retort treatment is performed at 121°C and 0.2 MPa for 30 minutes is preferably 0.3 N/15 mm or greater, more preferably 0.5 N/15 mm or greater, still more preferably 1.0 N/15 mm or greater, and even still more preferably 2.0 N/15 mm or greater. When the wet peel strength is greater than or equal to the above-described lower limits, peeling between layers of the laminate or cohesive failure within a layer can be suppressed in a case where the laminate of the present disclosure is used for heat sterilization applications. A specific method of measuring the wet peel strength is as described below.

Examples of the film including the polypropylene base material film include a film consisting only of the polypropylene base material film and a printed film having a printed layer formed on one surface of the polypropylene base material film.

Examples of the film including the barrier film and the heat sealant film include a film obtained by laminating the barrier film and the heat sealant film via the adhesive layer.

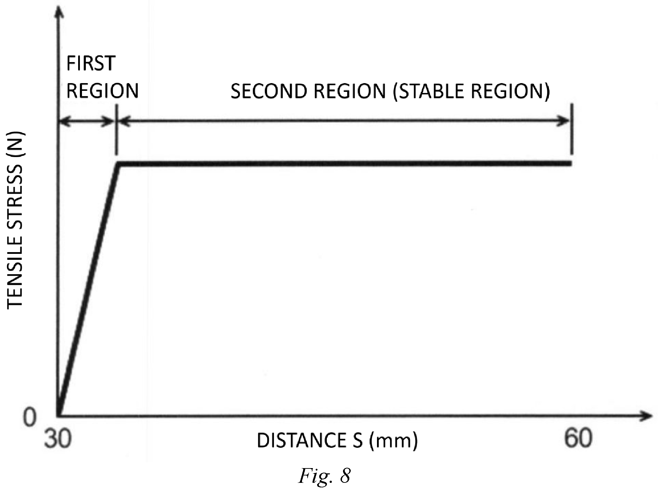

A Tensilon universal material testing machine (manufactured by Orientec Co., Ltd.) is used as a tensile tester. First, the laminate of the present disclosure is cut into an A4 size, folded in half along the long side to make the heat sealant films face each other, and heat-sealed at a width of 7 mm on three sides including the folded part, thereby preparing a three-side-sealed packaging bag. This packaging bag is filled with 200 mL of tap water, and the remaining side is heat-sealed to seal the packaging bag to form a retort packaging bag filled with the contents. The retort packaging bag is subjected to a semi-retort treatment using steam at 121°C and 0.2 MPa for 30 minutes. Next, the laminate is cut from the packaging bag after the retort treatment to prepare a rectangular test specimen having a short side of 15 mm such that the long-side direction of the test specimen matches the machine direction (MD direction) of the polymer film 10, and for the specimen, the film including the polypropylene base material film and the film including the barrier film and the heat sealant film are peeled from the laminate by 15 mm in the long-side direction. Thereafter, the portions from which the film including the polypropylene base material film and the film including the barrier film and the heat sealant film have already been peeled are respectively gripped by a pair of grips of the measuring instrument. Water is dropped with a dropper onto an interfacial part between the portion where the film including the polypropylene base material film and the film including the barrier film and the heat sealant film maintain bonding and the portion where the film including the polypropylene base material film and the film including the barrier film and the heat sealant film is peeled off, as viewed in the longitudinal direction of the test specimen. The pair of grips is pulled in opposite directions (180° peeling) at a speed of 50 mm/min in a direction orthogonal to the plane direction of the portion where the film including the polypropylene base material film and the film including the barrier film and the heat sealant film are still laminated, and the average value of the tensile stress in a stable region (see Fig. 8) is measured. A distance S between the grips is set to 30 mm at the start of pulling, and the distance S between the grips is set to 60 mm at the end of pulling. Fig. 8 is a graph showing a change in tensile stress with respect to the distance S between the grips. As shown in Fig. 8, the change in tensile stress with respect to the distance S passes through a first region and enters a second region (stable region) having a smaller rate of change than the first region. The average value of the tensile stress in the stable region is measured. Further, the laminate is cut from the packaging bag after the semi-retort treatment to prepare a rectangular test specimen having a short side of 15 mm such that the long-side direction of the test specimen matches the transverse direction (TD direction) of the polymer film 10, and for the specimen, the film including the polypropylene base material film and the film including the barrier film and the heat sealant film are peeled from the laminate by 15 mm in the long-side direction. Thereafter, the average value of the tensile stress in the stable region is measured in the same manner as described above. Between the smaller measured value and the larger measured value obtained as described above, the smaller measured value is defined as the wet peel strength when the film including the polypropylene base material film and the film including the barrier film and the heat sealant film are peeled from the laminate.

In the laminate of the present disclosure, the wet peel strength basically corresponds to the adhesion strength between the first resin layer and the vapor-deposited film. However, when the adhesion strength between the first resin layer and the vapor-deposited film increases, the cohesive failure of the adhesive layer between the polypropylene base material film and the barrier film and peeling between the polypropylene base material film and the printed layer may occur. In such cases, the cohesive failure strength or the peel strength between the polypropylene base material film and the printed layer corresponds to the wet peel strength. The peeled interface can be identified by evaluating the peeled portion of the test specimen after the measurement of the wet peel strength, using FT-IR (ATR method) and XPS.

(Packaging bag)

The packaging bag can be prepared by making the heat sealant film 18 side of the laminate the inner surface and heat-sealing required sites of the heat sealant films 18 to each other. The packaging bag may be in any form, such as a three-side-seal, a four-side-seal, a stand-up type, a gusset type, a pillow type, or a type with an extraction spout.

The prepared packaging bag is filled with contents such as food, seasonings, beverages, supplements, pharmaceuticals, enteral nutrients, pet food, or the like, and then sealed. The sealed packaging bag is subjected to a boiling treatment or a retort treatment. Further, some packaging bags are filled with contents after the contents are heated, and then sealed. For example, the inner surface of the packaging bag is sterilized by filling the packaging bag with the contents heated to 80°C or higher.

The packaging bag according to an embodiment is a heat-sterilizable food pouch. The heat-sterilizable food pouch is a packaging bag that accommodates food as the contents and then is subjected to a heat sterilization treatment.

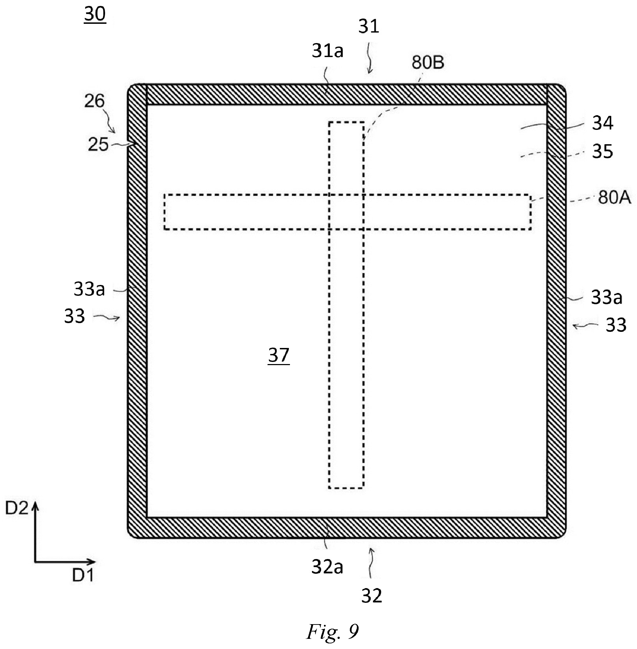

Fig. 9 is a front view showing a packaging bag according to an embodiment. A packaging bag 30 includes an accommodating portion 37 that accommodates contents. The configuration of the packaging bag 30 will be described below.

The packaging bag 30 is a so-called flat pouch prepared by bonding a front-side film and a rearside film. The packaging bag 30 has an upper portion 31, a lower portion 32, and a pair of side portions 33, and has a substantially rectangular outline in a front view. Further, the names such as "upper portion", "lower portion", and "side portion", and the terms such as "upper" and "lower" merely represent the relative positions and directions of the packaging bag 30 and the constituent elements thereof based on a state where an opening for filling the contents is positioned in the upper portion. The orientation and the like of the packaging bag 30 during transport or use are not limited by the names and the terms used in the present specification.

The width direction of the packaging bag 30 is also referred to as a first direction D1. The pair of side portions 33 described above face each other in the first direction D1. Further, a direction orthogonal to the first direction D1 is also referred to as a second direction D2. In the packaging bag 30 according to the present embodiment, the assumed mode of use is that a consumer opens the packaging bag 30 by tearing the packaging bag 30 in the first direction D1.

As shown in Fig. 9, the packaging bag 30 includes a front-surface laminate 34 constituting the front surface and a rear-surface laminate 35 constituting the rear surface.

Further, the terms "front-surface laminate" and "rear-surface laminate" described above merely define each laminate according to the positional relationship, and the method of providing the laminate when producing the packaging bag 30 is not limited by the terms. For example, the packaging bag 30 may be produced using a single laminate in which the front-surface laminate 34 and the rear-surface laminate 35 are continuously provided, or may be produced using a total of two laminates, in other words, one front-surface laminate 34 and one rear-surface laminate 35.

The inner surfaces of the front-surface laminate 34 and the rear-surface laminate 35 are bonded to each other by a seal portion. In the front view of the packaging bag 30 in Fig. 9, the seal portion is hatched.

As shown in Fig. 9, the seal portion includes an outer edge seal portion extending along an outer edge of the packaging bag 30. The outer edge seal portion includes a lower seal portion 32a extending along the lower portion 32, and a pair of side seal portions 33a extending along the pair of side portions 33. After the packaging bag 30 accommodates the contents, the inner surface of the front-surface laminate 34 and the inner surface of the rear-surface laminate 35 are bonded to each other at the upper portion 31 to form an upper seal portion 31a, and thus the packaging bag 30 is sealed.

The lower seal portion 32a, the side seal portions 33a, and the upper seal portion 31a are seal portions formed by bonding the inner surface of the front-surface laminate 34 and the inner surface of the rear-surface laminate 35.

The method of forming the seal portion is not particularly limited as long as the packaging bag 30 can be sealed by bonding the opposing laminates to each other. For example, the seal portion may be formed by melting the inner surfaces of the laminates through heating or the like to weld the inner surfaces to each other, that is, by heat-sealing. Alternatively, the seal portion may be formed by making the inner surfaces of the opposing laminates adhere to each other using an adhesive or the like.

The front-surface laminate 34 and the rear-surface laminate 35 may be provided with an easy-opening means 25 for opening the packaging bag 30 by tearing the front-surface laminate 34 and the rear-surface laminate 35 in the first direction D1. For example, as shown in Fig. 9, the easy-opening means 25 may have a notch 26 formed in the side-seal portion 33a of the packaging bag 30, which serves as a starting point of tearing. Further, the portion that serves as a path for tearing the packaging bag 30 is provided with a half-cut line formed by laser processing, a cutter, or the like as the easy-opening means 25.

Further, although not shown, the easy-opening means 25 may have a group of cuts or scars formed in a region of the front-surface laminate 34 and the rear-surface laminate 35 where the seal portion is formed. The group of scars may have a plurality of through-holes formed to penetrate the front-surface laminate 34 and/or the rear-surface laminate 35.

Alternatively, the group of scars may have a plurality of holes formed in the outer surface of the front-surface laminate 34 and/or the rear-surface laminate 35 not to penetrate the front-surface laminate 34 and/or the rear-surface laminate 35.

In the laminate constituting the heat-sterilized food pouch which is an embodiment of the packaging bag of the present disclosure, the wet peel strength when the film including the polypropylene base material film and the film including the barrier film and the heat sealant film are peeled off in conformity with JIS K 6854-2:1999 is preferably 0.3 N/15 mm or greater, more preferably 0.5 N/15 mm or greater, still more preferably 1.0 N/15 mm or greater, and even still more preferably 2.0 N/15 mm or greater. In the laminate constituting the heat-sterilized food pouch, when the wet peel strength is greater than or equal to the above-described lower limits, peeling between layers or cohesive failure within a layer of the laminate constituting the heat-sterilized food pouch can be suppressed.

When the wet peel strength is measured, the laminate constituting the packaging bag 30 is cut to prepare a test specimen such that the long-side direction of the test specimen matches the width direction (first direction D1) of the packaging bag 30 as indicated by a reference numeral 80A in Fig. 9. Further, the laminate constituting the packaging bag 30 is cut to prepare a test specimen such that the long-side direction of the test specimen matches the direction orthogonal to the width direction (second direction D2) of the packaging bag 30 as indicated by a reference numeral 80B in Fig. 9. Thereafter, the wet peel strengths of two test specimens are measured using a tensile tester. The smaller measured value is defined as the wet peel strength when the film including the polypropylene base material film and the film including the barrier film and the heat sealant film are peeled from the laminate constituting the heat-sterilized food pouch.

A specific method of measuring the wet peel strength of the test specimen is as described above.

EXAMPLES

Hereinafter, the present disclosure will be described in more detail based on examples, but the present disclosure is not limited to the following examples.

Polyamide resins used in the following experimental examples are as follows.

· Polyamide A

Amorphous aromatic polyamide

Copolymer of 1,6-hexanediamine and dicarboxylic acid in which molar ratio of isophthalic acid to terephthalic acid is 1:1

· Polyamide B

Amorphous aromatic polyamide

Copolymer of 1,6-hexanediamine and dicarboxylic acid in which molar ratio of isophthalic acid to terephthalic acid is 7:3

· Polyamide C

Crystalline aromatic polyamide

Copolymer of m-xylylenediamine and adipic acid

· Polyamide D

Crystalline aromatic polyamide

Copolymer of m-xylylenediamine and dicarboxylic acid in which molar ratio of adipic acid to isophthalic acid is 93:7

· Polyamide E

Aliphatic polyamide

Homopolymer of 6-aminohexanoic acid units

Synthesized by ring-opening polymerization of ε-caprolactam

[Experimental Example 1-1]

As the resin (first resin) constituting the first resin layer, a mixture of 80% by mass of polyamide A and 20% by mass of polyamide C was used.

As the resin (second resin) constituting the second resin layer, an acid-modified product of a polypropylene random copolymer (prepared by graft polymerization of 1.2% by mole of maleic anhydride onto an ethylene-1-butene-propylene random copolymer, MFR: 5.0) was used.

As the resin (third resin) constituting the third resin layer, homopolypropylene (MFR: 3.0) was used.

As the resin (fourth resin) constituting the fourth resin layer, an ethylene-1-butene-propylene random copolymer (MFR: 5.3) was used.

After co-extrusion of the first resin, the second resin, the third resin, and the fourth resin, the resultant was stretched 5.0 times in the machine direction (MD direction) and 10.0 times in the transverse direction (TD direction) using a sequential biaxial stretching apparatus, to prepare a polymer film of Experimental Example 1-1, including the first resin layer (0.7 $\mu$m), the second resin layer (1.0 $\mu$m), the third resin layer (17.0 $\mu$m), and the fourth resin layer (1.3 $\mu$m) in this order.

The thickness of the polymer film of Experimental Example 1-1 was 20 $\mu$m.

The content of polypropylene in the entire polymer film of Experimental Example 1-1 was 95% by mass.

[Experimental Example 1-2]

A polymer film of Experimental Example 1-2 was prepared in the same manner as in Experimental Example 1-1 except that a mixture of 90% by mass of polyamide A and 10% by mass of polyamide C was used as the first resin.

[Experimental Example 1-3]

A polymer film of Experimental Example 1-3 was prepared in the same manner as in Experimental Example 1-1 except that a mixture of 80% by mass of polyamide B and 20% by mass of polyamide D was used as the first resin.

[Experimental Example 1-4]

A polymer film of Experimental Example 1-4 was prepared in the same manner as in Experimental Example 1-1 except that a mixture of 90% by mass of polyamide B and 10% by mass of polyamide D was used as the first resin.

[Experimental Example 1-5]

A polymer film of Experimental Example 1-5 was prepared in the same manner as in Experimental Example 1-1 except that a mixture of 86% by mass of polyamide B and 14% by mass of polyamide E was used as the first resin.

[Experimental Example 1-6]

A polymer film of Experimental Example 1-6 was prepared in the same manner as in Experimental Example 1-1 except that a mixture of 90% by mass of polyamide B and 10% by mass of polyamide E was used as the first resin.

[Experimental Example 1-7]

A polymer film of Experimental Example 1-7 was prepared in the same manner as in Experimental Example 1-1 except that polyamide B was used as the first resin.

[Experimental Example 1-8]

A polymer film of Experimental Example 1-8 was prepared in the same manner as in Experimental Example 1-7 except that the thickness of the first resin layer was set to 0.4 $\mu$m.

The thickness of the polymer film of Experimental Example 1-8 was 19.7 $\mu$m.

The content of polypropylene in the entire polymer film of Experimental Example 1-8 was 97% by mass.

[Experimental Example 1-9]

A polymer film of Experimental Example 1-9 was prepared in the same manner as in Experimental Example 1-7 except that the thickness of the first resin layer was set to 1.5 $\mu$m.

The thickness of the polymer film of Experimental Example 1-9 was 20.8 $\mu$m.

The content of polypropylene in the entire polymer film of Experimental Example 1-9 was 91% by mass.

[Experimental Example 1-10]

A polymer film of Experimental Example 1-10 was prepared in the same manner as in Experimental Example 1-7 except that a mixture of 95% by mass of an ethylene-1-butene-propylene random copolymer (MFR: 5.3) and 5% by mass of high-density polyethylene (MFR: 1.1) was used as the fourth resin.

[Experimental Example 1-11]

A polymer film of Experimental Example 1-11 was prepared in the same manner as in Experimental Example 1-1 except that a mixture of 20% by mass of polyamide B and 80% by mass of polyamide E was used as the first resin.

[Experimental Example 1-12]

A polymer film of Experimental Example 1-12 was prepared in the same manner as in Experimental Example 1-1 except that a mixture of 80% by mass of polyamide B and 20% by mass of polyamide E was used as the first resin.

[Experimental Example 1-13]

A polymer film of Experimental Example 1-13 was prepared in the same manner as in Experimental Example 1-7 except that the thickness of the first resin layer was set to 0.1 $\mu$m.

The thickness of the polymer film of Experimental Example 1-13 was 19.4 $\mu$m.

The content of polypropylene in the entire polymer film of Experimental Example 1-13 was 99% by mass.

[Experimental Example 1-14]

A polymer film of Experimental Example 1-14 was prepared in the same manner as in Experimental Example 1-7 except that the thickness of the first resin layer was set to 5.0 $\mu$m.

The thickness of the polymer film of Experimental Example 1-14 was 24.3 $\mu$m.

The content of polypropylene in the entire polymer film of Experimental Example 1-14 was 74% by mass.

[Experimental Example 1-15]

As the resin (first resin) constituting the first resin layer, polyamide B was used.

As the resin (second resin) constituting the second resin layer, an acid-modified product of a polypropylene random copolymer (prepared by graft polymerization of 1.2% by mole of maleic anhydride onto an ethylene-1-butene-propylene random copolymer, MFR: 5.0) was used.

As the resin (third resin) constituting the third resin layer, homopolypropylene (MFR: 3.0) was used.

As the resin (fourth resin) constituting the fourth resin layer, an acid-modified product of a polypropylene random copolymer (prepared by graft polymerization of 1.2% by mole of maleic anhydride onto an ethylene-1-butene-propylene random copolymer, MFR: 5.0) was used.

As the resin (fifth resin) constituting the fifth resin layer, polyamide B was used.

After co-extrusion of the first resin, the second resin, the third resin, the fourth resin, and the fifth resin, the resultant was stretched 5.0 times in the machine direction (MD direction) and 10.0 times in the transverse direction (TD direction) using a sequential biaxial stretching apparatus, to prepare a polymer film of Experimental Example 1-15, including the first resin layer (0.7 $\mu$m), the second resin layer (1.0 $\mu$m), the third resin layer (17.0 $\mu$m), the fourth resin layer (1.0 $\mu$m), and the fifth resin layer (0.7 $\mu$m) in this order.

The thickness of the polymer film of Experimental Example 1-15 was 20.4 $\mu$m.

The content of polypropylene in the entire polymer film of Experimental Example 1-15 was 91% by mass.

[Experimental Example 1-16]

A polymer film of Experimental Example 1-16 was prepared in the same manner as in Experimental Example 1-3 except that homopolypropylene (MFR: 3.0) was used as the fourth resin.

[Experimental Example 1-17]

A polymer film of Experimental Example 1-17 was prepared in the same manner as in Experimental Example 1-12 except that homopolypropylene (MFR: 3.0) was used as the fourth resin.

[Experimental Example 1-18]

A polymer film of Experimental Example 1-18 was prepared in the same manner as in Experimental Example 1-7 except that the film was stretched 4.7 times in the machine direction (MD direction) instead of 5.0 times, and the amount of resin extruded was adjusted such that the thicknesses of the first resin layer, the second resin layer, the third resin layer, and the fourth resin layer after stretching were 0.7 $\mu$m, 1.0 $\mu$m, 17.0 $\mu$m, and 1.3 $\mu$m, respectively.

[Experimental Example 1-19]

A polymer film of Experimental Example 1-19 was prepared in the same manner as in Experimental Example 1-7 except that the film was stretched 4.5 times in the machine direction (MD direction) instead of 5.0 times, and the amount of resin extruded was adjusted such that the thicknesses of the first resin layer, the second resin layer, the third resin layer, and the fourth resin layer after stretching were 0.7 $\mu$m, 1.0 $\mu$m, 17.0 $\mu$m, and 1.3 $\mu$m, respectively.

[Experimental Example 1-20]

A polymer film of Experimental Example 1-20 was prepared in the same manner as in Experimental Example 1-7 except that the film was stretched 4.3 times in the machine direction (MD direction) instead of 5.0 times, and the amount of resin extruded was adjusted such that the thicknesses of the first resin layer, the second resin layer, the third resin layer, and the fourth resin layer after stretching were 0.7 $\mu$m, 1.0 $\mu$m, 17.0 $\mu$m, and 1.3 $\mu$m, respectively.

[Experimental Example 1-21]

A polymer film of Experimental Example 1-21 was prepared in the same manner as in Experimental Example 1-1 except that a mixture of 75% by mass of polyamide A and 25% by mass of polyamide C was used as the first resin.

(Measurement of $^1$H-NMR spectrum)

Each of the polymer films of Experimental Examples 1-1 to 1-21 was cut into small pieces with scissors and placed in a sample vial. 6 mL of chloroform and 4 mL of formic acid were added to the sample vial, and the mixture was allowed to stand overnight. In this manner, the first resin layer constituting the polymer film was dissolved in the mixed solvent of chloroform and formic acid.

The organic solvent phase was filtered through a chromatodisc having a filter pore size of 0.45 $\mu$m, concentrated, dried, and solidified using a nitrogen blowing device, and used as a measurement sample.

20 to 30 mg of the measurement sample was dissolved in a mixed solvent of 0.5 mL of deuterated chloroform (CDCl$_3$) and 0.5 mL of formic acid, and the solution was transferred to an NMR sample tube.

The $^1$H-NMR spectrum was measured using an NMR device (AVANCE III HD 400 MHz, manufactured by Bruker Japan Co., Ltd.) under the following measurement conditions.

(Measurement conditions)

· Observed nucleus: $^1$H

· Measurement temperature: room temperature

· Number of scans: 32 scan

· Relaxation delay: 5 s

· Probe: PA BBO 400S1 BBF-H-D-05 Z SP

· Deuterated solvent: CDCl$_3$ (internal standard: TMS) + formic acid

· Window function: exponential

· Line broadening: 0.3 Hz

Further, 20 to 30 mg of each pellet of polyamides A to E was dissolved in a mixed solvent of 0.5 mL of deuterated chloroform (CDCl$_3$) and 0.5 mL of formic acid to prepare a standard sample, and the $^1$H-NMR spectrum was measured in the same manner as described above.

The proton-derived peaks observed in the $^1$H-NMR spectrum measurement of the measurement samples prepared from each polymer film were assigned with reference to the proton-derived peaks observed in the $^1$H-NMR spectrum measurement of the standard samples prepared from each pellet, the ratio of the number of aminocarboxylic acid units and the ratio of the number of dicarboxylic acid units were calculated from the area ratio of each peak, and the ratio of the number of dicarboxylic acid units to the total number of aminocarboxylic acid units and dicarboxylic acid units and the ratio of the number of isophthalic acid units to the total number of aminocarboxylic acid units and dicarboxylic acid units were respectively calculated.

(Measurement of surface roughness Sa)

Each of the polymer films of Experimental Examples 1-1 to 1-12 and 1-15 to 1-21 was placed in a chamber of an ion sputter (E-1030, manufactured by Hitachi Science Systems, Ltd.) such that one of the outermost layers (the surface of the first resin layer) faced the Pt-Pd target side. After reducing the pressure, argon gas was introduced, and the pressure was adjusted to 10 Pa. A Pt-Pd layer was deposited on the surface of the first resin layer for 60 seconds. Each of the deposited polymer films was cut into 1.5 cm squares and fixed onto a glass slide with tape such that the deposited surface was on a side opposite to the glass slide.

Next, a laser microscope (manufactured by Keyence Corporation, measurement unit model: VK-X160, control unit model: VK-X150) was set with an objective lens magnification of 50x, a zoom of 1x, a measurement quality of "ultra-high speed", a pitch of 0.13 $\mu$m, and no double scan. At these settings, the field of view was 203.555 $\mu$m × 271.495 $\mu$m.

The polymer film fixed to the glass slide was placed under the objective lens such that the machine direction (MD direction) was parallel to the short-side direction in the field of view. A stitching range of 1 in the short-side direction and 5 in the long-side direction was specified, the scan height limits and the brightness were manually set as appropriately, and three stitched images, each consisting of 5 images stitched in the transverse direction (TD direction), were obtained. The stitched images had a size of 200 ± 5 $\mu$m × 1220 ± 10 $\mu$m.

In each stitched image, waviness was removed by specifying the waviness removal value as 0.5 mm in the surface shape correction. In the surface roughness measurement, the surface roughness Sa was calculated by specifying the entire area of each stitched image. The average of the three calculated values was defined as the surface roughness Sa of one outermost layer.

The surface roughness Sa of the other outermost layer (the surface of the fourth resin layer in Experimental Examples 1-1 to 1-12 and 1-18 to 1-21 and the surface of the fifth resin layer in Experimental Example 1-15) was calculated by performing measurement in the same manner as described above, and the average of the three calculated values was defined as the surface roughness Sa of the other outermost layer.

A smaller surface roughness Sa of the one outermost layer indicates that the surface of the first resin layer in the stretched polymer film is smoother, which means that the resin constituting the first resin layer is suitable for film formation.

A larger surface roughness Sa of the other outermost layer indicates that the other outermost layer in the stretched polymer film is rougher, which means that the blocking phenomenon, in which the other outermost layer adheres to the one outermost layer when the polymer film is wound into a roll shape, can be suppressed.

(Evaluation of film-forming properties)

The surface state of each of the polymer films of Experimental Examples 1-1 to 1-21 was observed. The evaluation criteria were as follows.

A: Resin breakage or hole formation did not occur in the first resin layer even after stretching, and the film-forming properties were satisfactory.

B: Resin breakage or hole formation did not occur in the first resin layer even after stretching, but strong curling occurred in the polymer film due to the shrinkage of the first resin layer after stretching, and the film-forming properties were somewhat poor.

C: Resin breakage or hole formation occurred in the first resin layer due to stretching, and the film-forming properties were poor.

(Evaluation of winding properties)

Each of the polymer films of Experimental Examples 1-1 to 1-21 was wound up after film formation, and the evaluation was performed according to the following evaluation criteria.

A: Wrinkles did not occur during winding.

B: Wrinkles occurred during winding, and thus film formation and winding were forced to be discontinued.

The configurations, the measurement results, and the evaluation results of Experimental Examples 1-1 to 1-21 are listed in Tables 1 to 4.

[Table 1]

| Table 1 | | Experimental Example 1-1 | Experimental Example 1-2 | Experimental Example 1-3 | Experimental Example 1-4 | Experimental Example 1-5 |
|---|---|---|---|---|---|---|
| Composition of first resin layer | | Polyamide A 80% by mass | Polyamide A 90% by mass | Polyamide B 80% by mass | Polyamide B 90% by mass | Polyamide B 86% by mass |
| | | Polyamide C 20% by mass | Polyamide C 10% by mass | Polyamide D 20% by mass | Polyamide D 10% by mass | Polyamide E 14% by mass |
| Thickness of first resin layer [μm] | | 0.7 | 0.7 | 0.7 | 0.7 | 0.7 |
| Composition of second resin layer | | Acid-modified random PP | Acid-modified random PP | Acid-modified random PP | Acid-modified random PP | Acid-modified random PP |
| Composition of third resin layer | | Homo-PP | Homo-PP | Homo-PP | Homo-PP | Homo-PP |
| Composition of fourth resin layer | | Ter-PP 100% by mass | Ter-PP 100% by mass | Ter-PP 100% by mass | Ter-PP 100% by mass | Ter-PP 100% by mass |
| | | - | - | - | - | - |
| Composition of fifth resin layer | | - | - | - | - | - |
| Stretching ratio | Machine direction (MD direction) | 5.0 | 5.0 | 5.0 | 5.0 | 5.0 |
| | Transverse direction (TD direction) | 10.0 | 10.0 | 10.0 | 10.0 | 10.0 |
| Content of polypropylene [% by mass] | | 95 | 95 | 95 | 95 | 95 |
| (Dicarboxylic acid units contained in aromatic polyamide) /(aminocarboxylic acid units + dicarboxylic acid units) of first resin layer [% by mole] | | 100.0 | 100.0 | 100.0 | 100.0 | 73.8 |

(continued)

| Table 1 | | Experimental Example 1-1 | Experimental Example 1-2 | Experimental Example 1-3 | Experimental Example 1-4 | Experimental Example 1-5 |
|---|---|---|---|---|---|---|
| (Isophthalic acid units contained in aromatic polyamide) /(aminocarboxylic acid units + dicarboxylic acid units) of first resin layer [% by mole] | | 40.0 | 45.0 | 57.5 | 63.7 | 51.7 |
| Surface roughness Sa [$\mu$m] | One outermost layer | 0.065 | 0.068 | 0.042 | 0.041 | 0.057 |
| | The other outermost layer | 0.063 | 0.063 | 0.068 | 0.068 | 0.065 |
| Film-forming properties | | A | A | A | A | A |
| Winding properties | | A | A | A | A | A |
| Acid-modified random PP: acid-modified product of polypropylene random copolymer<br>Homo-PP: homopolypropylene<br>Ter-PP: ethylene-1-butene-propylene random copolymer | | | | | | |

[Table 2]

| Table 2 | | Experimental Example 1-6 | Experimental Example 1-7 | Experimental Example 1-8 | Experimental Example 1-9 | Experimental Example 1-10 |
|---|---|---|---|---|---|---|
| Composition of first resin layer | | Polyamide B 90% by mass | Polyamide B 100% by mass | Polyamide B 100% by mass | Polyamide B 100% by mass | Polyamide B 100% by mass |
| | | Polyamide E 10% by mass | - | - | - | - |
| Thickness of first resin layer [$\mu$m] | | 0.7 | 0.7 | 0.4 | 1.5 | 0.7 |
| Composition of second resin layer | | Acid-modified random PP | Acid-modified random PP | Acid-modified random PP | Acid-modified random PP | Acid-modified random PP |
| Composition of third resin layer | | Homo-PP | Homo-PP | Homo-PP | Homo-PP | Homo-PP |
| Composition of fourth resin layer | | Ter-PP 100% by mass | Ter-PP 100% by mass | Ter-PP 100% by mass | Ter-PP 100% by mass | Ter-PP 95% by mass |
| | | - | - | - | - | HDPE 5% by mass |
| Composition of fifth resin layer | | - | - | - | - | - |
| Stretching ratio | Machine direction (MD direction) | 5.0 | 5.0 | 5.0 | 5.0 | 5.0 |
| | Transverse direction (TD direction) | 10.0 | 10.0 | 10.0 | 10.0 | 10.0 |
| Content of polypropylene [% by mass] | | 95 | 95 | 97 | 91 | 95 |

(continued)

| Table 2 | | Experimental Example 1-6 | Experimental Example 1-7 | Experimental Example 1-8 | Experimental Example 1-9 | Experimental Example 1-10 |
|---|---|---|---|---|---|---|
| (Dicarboxylic acid units contained in aromatic polyamide) /(aminocarboxylic acid units + dicarboxylic acid units) of first resin layer [% by mole] | | 80.5 | 100.0 | 100.0 | 100.0 | 100.0 |
| (Isophthalic acid units contained in aromatic polyamide) /(aminocarboxylic acid units + dicarboxylic acid units) of first resin layer [% by mole] | | 56.4 | 70.0 | 70.0 | 70.0 | 70.0 |
| Surface roughness Sa [μm] | One outermost layer | 0.050 | 0.039 | 0.067 | 0.040 | 0.039 |
| | The other outermost layer | 0.065 | 0.063 | 0.063 | 0.063 | 0.101 |
| Film-forming properties | | A | A | A | A | A |
| Winding properties | | A | A | A | A | A |

Acid-modified random PP: acid-modified product of polypropylene random copolymer
Homo-PP: homopolypropylene
Ter-PP: ethylene-1-butene-propylene random copolymer
HDPE: high-density polyethylene

[Table 3]

| Table 3 | | Experimental Example 1-11 | Experimental Example 1-12 | Experimental Example 1-13 | Experimental Example 1-14 | Experimental Example 1-15 |
|---|---|---|---|---|---|---|
| Composition of first resin layer | | Polyamide B 20% by mass | Polyamide B 80% by mass | Polyamide B 100% by mass | Polyamide B 100% by mass | Polyamide B 100% by mass |
| | | Polyamide E 80% by mass | Polyamide E 20% by mass | - | - | - |
| Thickness of first resin layer [μm] | | 0.7 | 0.7 | 0.1 | 5.0 | 0.7 |
| Composition of second resin layer | | Acid-modified random PP | Acid-modified random PP | Acid-modified random PP | Acid-modified random PP | Acid-modified random PP |
| Composition of third resin layer | | Homo-PP | Homo-PP | Homo-PP | Homo-PP | Homo-PP |
| Composition of fourth resin layer | | Ter-PP 100% by mass | Ter-PP 100% by mass | Ter-PP 100% by mass | Ter-PP 100% by mass | Acid-modified random PP 100% by mass |
| | | - | - | - | - | - |
| Composition of fifth resin layer | | - | - | - | - | Polyamide B 100% by mass |

(continued)

| Table 3 | | Experimental Example 1-11 | Experimental Example 1-12 | Experimental Example 1-13 | Experimental Example 1-14 | Experimental Example 1-15 |
|---|---|---|---|---|---|---|
| Stretching ratio | Machine direction (MD direction) | 5.0 | 5.0 | 5.0 | 5.0 | 5.0 |
| | Transverse direction (TD direction) | 10.0 | 10.0 | 10.0 | 10.0 | 10.0 |
| Content of polypropylene [% by mass] | | 95 | 95 | 99 | 74 | 91 |
| (Dicarboxylic acid units contained in aromatic polyamide) /(aminocarboxylic acid units + dicarboxylic acid units) of first resin layer [% by mole] | | 10.3 | 64.8 | 100.0 | 100.0 | 100.0 |
| (Isophthalic acid units contained in aromatic polyamide) /(aminocarboxylic acid units + dicarboxylic acid units) of first resin layer [% by mole] | | 7.2 | 45.3 | 70.0 | 70.0 | 70.0 |
| Surface roughness Sa [μm] | One outermost layer | 0.344 | 0.066 | - | - | 0.039 |
| | The other outermost layer | 0.065 | 0.065 | - | - | 0.039 |
| Film-forming properties | | B | A | C | B | A |
| Winding properties | | A | A | A | A | B |
| Acid-modified random PP: acid-modified product of polypropylene random copolymer Homo-PP: homopolypropylene Ter-PP: ethylene-1-butene-propylene random copolymer | | | | | | |

[Table 4]

| Table 4 | | Experimental Example 1-16 | Experimental Example 1-17 | Experimental Example 1-18 | Experimental Example 1-19 | Experimental Example 1-20 | Experimental Example 1-21 |
|---|---|---|---|---|---|---|---|
| Composition of first resin layer | | Polyamide B 80% by mass | Polyamide B 80% by mass | Polyamide B 100% by mass | Polyamide B 100% by mass | Polyamide B 100% by mass | Polyamide A 75% by mass |
| | | Polyamide D 20% by mass | Polyamide E 20% by mass | - | - | - | Polyamide C 25% by mass |
| Thickness of first resin layer [$\mu$m] | | 0.7 | 0.7 | 0.7 | 0.7 | 0.7 | 0.7 |
| Composition of second resin layer | | Acid-modified random PP | Acid-modified random PP | Acid-modified random PP | Acid-modified random PP | Acid-modified random PP | Acid-modified random PP |
| Composition of third resin layer | | Homo-PP | Homo-PP | Homo-PP | Homo-PP | Homo-PP | Homo-PP |
| Composition of fourth resin layer | | Homo-PP 100% by mass | Homo-PP 100% by mass | Ter-PP 100% by mass | Ter-PP 100% by mass | Ter-PP 100% by mass | Ter-PP 100% by mass |
| | | - | - | - | - | - | - |
| Composition of fifth resin layer | | - | - | - | - | - | - |
| Stretching ratio | Machine direction (MD direction) | 5.0 | 5.0 | 4.7 | 4.5 | 4.3 | 5.0 |
| | Transverse direction (TD direction) | 10.0 | 10.0 | 10.0 | 10.0 | 10.0 | 10.0 |
| Content of polypropylene [% by mass] | | 95 | 95 | 95 | 95 | 95 | 95 |
| (Dicarboxylic acid units contained in aromatic polyamide) /(aminocarboxylic acid units + dicarboxylic acid units) of first resin layer [% by mole] | | 100.0 | 64.8 | 100.0 | 100.0 | 100.0 | 100.0 |
| (Isophthalic acid units contained in aromatic polyamide) /(aminocarboxylic acid units + dicarboxylic acid units) of first resin layer [% by mole] | | 57.5 | 45.3 | 70.0 | 70.0 | 70.0 | 37.5 |
| Surface rough-ness Sa [$\mu$m] | One outermost layer | 0.042 | 0.066 | 0.039 | 0.039 | 0.039 | 0.064 |
| | The other outermost layer | - | - | 0.063 | 0.063 | 0.063 | 0.063 |
| Film-forming properties | | A | A | A | A | A | A |
| Winding properties | | A | A | A | A | A | A |
| Acid-modified random PP: acid-modified product of polypropylene random copolymer<br>Homo-PP: homopolypropylene<br>Ter-PP: ethylene-1-butene-propylene random copolymer | | | | | | | |

As listed in Tables 1 to 4, the polymer films of Experimental Examples 1-1 to 1-10, 1-12, and 1-16 to 1-21 exhibited excellent film-forming properties.

Further, the polymer films of Experimental Examples 1-1 to 1-13 and 1-15 to 1-21 had a polypropylene content of 90% by mass or greater, and thus exhibited excellent recyclability.

In addition, the polymer films of Experimental Examples 1-1 to 1-21 were provided with the second resin layer containing an acid-modified product of polypropylene between the first resin layer and the third resin layer, and thus were capable of suppressing peeling between the first resin layer and the third resin layer.

[Experimental Example 2-1]

The polymer film of Experimental Example 1-1 was introduced into an unwinding section inside a pressure-reducible chamber having an unwinding section, a plasma treatment section, a film deposition section, a winding section, and the like, and the pressure inside the chamber was reduced. A plasma pretreatment was performed on the surface of the first resin layer of the polymer film using a mixed gas of argon and oxygen at a volume ratio of 1:1 with a plasma treatment apparatus by a roll-to-roll method while applying tension to the polymer film. Further, in the continuously conveyed film deposition section, aluminum was vapor-deposited onto the plasma-treated surface while introducing oxygen using a resistance heating method as a heating means for aluminum, thereby forming an aluminum oxide (alumina) vapor-deposited film having a thickness of 10 nm (PVD method).

Next, a barrier coating agent was prepared on the surface of the vapor-deposited film according to the following procedures to form a barrier coating layer.

385 g of water, 67 g of isopropyl alcohol, and 9.1 g of 0.5 N hydrochloric acid were mixed to prepare a solution having a pH of 2.2. 175 g of tetraethoxysilane was mixed into this solution as a metal alkoxide while cooling the solution to 10°C to obtain a solution A.

14.7 g of polyvinyl alcohol having a degree of saponification of 99% or greater and a degree of polymerization of 2400 as a water-soluble polymer, 324 g of water, and 17 g of isopropyl alcohol were mixed to obtain a solution B.

The solution A and the solution B were mixed with each other at a mass ratio of 5.5:4.5 to obtain a barrier coating agent. The surface of the vapor-deposited film was coated with the barrier coating agent, and dried at 100°C for 10 seconds. The thickness of the barrier coating layer formed by drying the barrier coating agent was 300 nm.

In this manner, a barrier film of Experimental Example 2-1 was prepared.

[Experimental Example 2-2]

A barrier film of Experimental Example 2-2 was prepared in the same manner as in Experimental Example 2-1 except that the polymer film of Experimental Example 1-2 was used in place of the polymer film of Experimental Example 1-1.

[Experimental Example 2-3]

A barrier film of Experimental Example 2-3 was prepared in the same manner as in Experimental Example 2-1 except that the polymer film of Experimental Example 1-3 was used in place of the polymer film of Experimental Example 1-1.

[Experimental Example 2-4]

A barrier film of Experimental Example 2-4 was prepared in the same manner as in Experimental Example 2-1 except that the polymer film of Experimental Example 1-4 was used in place of the polymer film of Experimental Example 1-1.

[Experimental Example 2-5]

A barrier film of Experimental Example 2-5 was prepared in the same manner as in Experimental Example 2-1 except that the polymer film of Experimental Example 1-5 was used in place of the polymer film of Experimental Example 1-1.

[Experimental Example 2-6]

A barrier film of Experimental Example 2-6 was prepared in the same manner as in Experimental Example 2-1 except that the polymer film of Experimental Example 1-6 was used in place of the polymer film of Experimental Example 1-1.

[Experimental Example 2-7]

A barrier film of Experimental Example 2-7 was prepared in the same manner as in Experimental Example 2-1 except that the polymer film of Experimental Example 1-7 was used in place of the polymer film of Experimental Example 1-1.

[Experimental Example 2-8]

A barrier film of Experimental Example 2-8 was prepared in the same manner as in Experimental Example 2-3 except that the formation of the vapor-deposited film was changed as described below.
The surface of the first resin layer of the polymer film of Experimental Example 1-3 was subjected to a plasma pretreatment using a mixed gas of argon and oxygen at a volume ratio of 1:1. The plasma-treated surface was vapor-deposited with silicon oxide using silicon monoxide as a deposition source by an electron beam heating method as a heating means to form a silicon oxide vapor-deposited film with a thickness of 30 nm (PVD method).

[Experimental Example 2-9]

A barrier film of Experimental Example 2-9 was prepared in the same manner as in Experimental Example 2-8 except that the barrier coating layer was not formed.

[Experimental Example 2-10]

A barrier film of Experimental Example 2-10 was prepared in the same manner as in Experimental Example 2-8 except that the polymer film of Experimental Example 1-7 was used in place of the polymer film of Experimental Example 1-3.

[Experimental Example 2-11]

A barrier film of Experimental Example 2-11 was prepared in the same manner as in Experimental Example 2-10 except that the barrier coating layer was not formed.

[Experimental Example 2-12]

A barrier film of Experimental Example 2-12 was prepared in the same manner as in Experimental Example 2-1 except that the polymer film of Experimental Example 1-21 was used in place of the polymer film of Experimental Example 1-1.

[Experimental Example 2-13]

A barrier film of Experimental Example 2-13 was prepared in the same manner as in Experimental Example 2-8 except that the polymer film of Experimental Example 1-8 was used in place of the polymer film of Experimental Example 1-3.

[Experimental Example 2-14]

A barrier film of Experimental Example 2-14 was prepared in the same manner as in Experimental Example 2-8 except that the polymer film of Experimental Example 1-9 was used in place of the polymer film of Experimental Example 1-3.

[Experimental Example 2-15]

A barrier film of Experimental Example 2-15 was prepared in the same manner as in Experimental Example 2-8 except that the polymer film of Experimental Example 1-10 was used in place of the polymer film of Experimental Example 1-3.

[Experimental Example 2-16]

A barrier film of Experimental Example 2-16 was prepared in the same manner as in Experimental Example 2-8 except that the polymer film of Experimental Example 1-18 was used in place of the polymer film of Experimental Example 1-3.

[Experimental Example 2-17]

A barrier film of Experimental Example 2-17 was prepared in the same manner as in Experimental Example 2-8 except that the polymer film of Experimental Example 1-19 was used in place of the polymer film of Experimental Example 1-3.

[Experimental Example 2-18]

A barrier film of Experimental Example 2-18 was prepared in the same manner as in Experimental Example 2-8 except that the polymer film of Experimental Example 1-20 was used in place of the polymer film of Experimental Example 1-3.

[Experimental Example 2-19]

A barrier film of Experimental Example 2-19 was prepared in the same manner as in Experimental Example 2-3 except that the formation of the vapor-deposited film was changed as described below.
A carbon-containing silicon oxide vapor-deposited film with a thickness of 30 nm was formed on the surface of the first resin layer of the polymer film of Experimental Example 1-3 using a plasma chemical vapor deposition apparatus (plasma CVD apparatus) by a Roll-to-Roll method while applying tension to the polymer film. The conditions for forming the vapor-deposited film were as follows.

(Formation conditions)

· Hexamethyldisiloxane:oxygen gas:helium = 1:10:10 (unit: slm)

· Electrode drum supply power: 22 kW

· Line speed: 40 m/min

[Experimental Example 2-20]

A barrier film of Experimental Example 2-20 was prepared in the same manner as in Experimental Example 2-19 except that the barrier coating layer was not formed.

[Experimental Example 2-21]

A barrier film of Experimental Example 2-21 was prepared in the same manner as in Experimental Example 2-19 except that the polymer film of Experimental Example 1-7 was used in place of the polymer film of Experimental Example 1-3.

[Experimental Example 2-22]

A barrier film of Experimental Example 2-22 was prepared in the same manner as in Experimental Example 2-21 except that the barrier coating layer was not formed.

[Experimental Example 2-23]

A barrier film of Experimental Example 2-23 was prepared in the same manner as in Experimental Example 2-1 except that the polymer film of Experimental Example 1-11 was used in place of the polymer film of Experimental Example 1-1.

[Experimental Example 2-24]

A barrier film of Experimental Example 2-24 was prepared in the same manner as in Experimental Example 2-1 except that the polymer film of Experimental Example 1-12 was used in place of the polymer film of Experimental Example 1-1.

[Experimental Example 2-25]

A barrier film of Experimental Example 2-25 was prepared in the same manner as in Experimental Example 2-1 except that the polymer film of Experimental Example 1-16 was used in place of the polymer film of Experimental Example 1-1.

[Experimental Example 2-26]

A barrier film of Experimental Example 2-26 was prepared in the same manner as in Experimental Example 2-1 except that the polymer film of Experimental Example 1-17 was used in place of the polymer film of Experimental Example 1-1.

[Experimental Example 2-27]

A barrier film of Experimental Example 2-27 was prepared in the same manner as in Experimental Example 2-3 except that the formation of the vapor-deposited film was changed as described below.
The surface of the first resin layer of the polymer film of Experimental Example 1-3 was subjected to a plasma pretreatment using a mixed gas of argon and oxygen at a volume ratio of 1:1. An aluminum vapor-deposited film with a thickness of 30 nm was formed on the plasma-treated surface using a vacuum metallization technology of the related art.

[Experimental Example 2-28]

A barrier film of Experimental Example 2-28 was prepared in the same manner as in Experimental Example 2-27 except that the polymer film of Experimental Example 1-7 was used in place of the polymer film of Experimental Example 1-3.

[Experimental Example 2-29]

A barrier film of Experimental Example 2-29 was prepared in the same manner as in Experimental Example 2-9 except that the polymer film of Experimental Example 1-5 was used in place of the polymer film of Experimental Example 1-3.

[Experimental Example 2-30]

A barrier film of Experimental Example 2-30 was prepared in the same manner as in Experimental Example 2-9 except that the polymer film of Experimental Example 1-6 was used in place of the polymer film of Experimental Example 1-3.

(Evaluation of gas barrier properties of barrier film)

The barrier films of Experimental Examples 2-1 to 2-30 were cut out to obtain test specimens. The oxygen transmission rates (unit: $cc/(m^2 \cdot day \cdot atm)$) and the water vapor transmission rates (unit: $g/(m^2 \cdot day)$) were measured using these specimens by the following methods.

[Oxygen transmission rate]

The test specimen was set such that the polymer film side was placed on an oxygen supply side, and the oxygen transmission rate thereof was measured using an oxygen transmission rate measuring apparatus (OX-TRAN 2/20, manufactured by MOCON) in an environment of a temperature of 23°C and a relative humidity of 90% RH in conformity with JIS K 7126-2:2006.

[Water vapor transmission rate]

The test specimen was set such that the polymer film side was placed on a water vapor supply side, and the water vapor transmission rate thereof was measured using a water vapor transmission rate measuring apparatus (PERMATRAN-W 3/33, manufactured by MOCON) in an environment of a temperature of 40°C and a relative humidity of 90% RH in conformity with JIS K 7129-2:2019.

(Preparation of laminate)

A biaxially stretched polypropylene film with a thickness of 20 $\mu$m was prepared as the polypropylene base material film. One surface of the polypropylene base material film was coated with a urethane-based printing ink using a gravure roll coating method to form a printed layer. The thickness of the printed layer during drying was 1 $\mu$m. Hereinafter, the polypropylene base material film on which the printed layer is formed will be referred to as a printed film.

The printed layer of the printed film was bonded to the surface of the barrier coating layer of the barrier film of Experimental Example 2-1 with a two-component curing polyurethane adhesive. The thickness of the adhesive layer formed by the two-component curing polyurethane adhesive was 2 $\mu$m.

Next, an unstretched polypropylene film with a thickness of 60 $\mu$m was prepared as the heat sealant film. The surface of the fourth resin layer of the barrier film of Experimental Example 2-1 was bonded to the heat sealant film with a two-component curing polyurethane adhesive. The thickness of the adhesive layer formed by the two-component curing polyurethane adhesive was 2 $\mu$m.

In this manner, a laminate was prepared.

Laminates were prepared in the same manner as described above by using the barrier films of Experimental Examples 2-2 to 2-8, 2-10, 2-13 to 2-19, 2-21, and 2-23 to 2-26 respectively in place of the barrier film of Experimental Example 2-1. Further, in the barrier laminates of Experimental Examples 2-9, 2-11, 2-12, 2-20, 2-22, and 2-27 to 2-30 in which no barrier coating layer was formed, the printing layer was bonded to the surface of the vapor-deposited film of the barrier film instead of being bonded to the surface of the barrier coating layer of the barrier film.

(Evaluation of gas barrier properties of laminate)

The laminates prepared from the barrier films of Experimental Examples 2-1 to 2-30 were cut out to obtain test specimens. The oxygen transmission rates and the water vapor transmission rates were measured using these specimens in the same manner as described above.

(Evaluation of gas barrier properties after semi-retort treatment)

Each of the laminates prepared from the barrier films of Experimental Examples 2-1 to 2-30 was cut into an A4 size, folded in half along the long side to make the heat sealant films face each other, and heat-sealed at a width of 7 mm on three sides including the folded part, thereby preparing a three-side-sealed packaging bag. This packaging bag was filled with 200 mL of tap water, and the remaining side was heat-sealed to seal the packaging bag to form a retort packaging bag filled with the contents. The retort packaging bag was subjected to a semi-retort treatment using steam at 121°C and 0.2 MPa for 30 minutes. The laminate was cut out from the retort packaging bag after the retort treatment, and the oxygen transmission rate and the water vapor transmission rate were measured in the same manner as described above.

(Evaluation of gas barrier properties after high-retort treatment)

Each of the laminates prepared from the barrier films of Experimental Examples 2-1 to 2-30 was cut into an A4 size, folded in half along the long side to make the heat sealant films face each other, and heat-sealed at a width of 7 mm on three sides including the folded part, thereby preparing a three-side-sealed packaging bag. This packaging bag was filled with 200 mL of tap water, and the remaining side was heat-sealed to seal the packaging bag to form a retort packaging bag filled with the contents. The retort packaging bag was subjected to a high-retort treatment using steam at 135°C and 0.3 MPa for 30 minutes. The laminate was cut out from the retort packaging bag after the retort treatment, and the oxygen transmission rate and the water vapor transmission rate were measured in the same manner as described above.

(Evaluation of gas barrier properties after high-retort treatment and flexing of laminate)

Each of the laminates prepared from the barrier films of Experimental Examples 2-1 to 2-30 was cut into a size of 320 mm $\times$ 440 mm, folded in half along the long side to make the heat sealant films face each other, and heat-sealed at a width of 7 mm on three sides including the folded part, thereby preparing a three-side-sealed packaging bag. This packaging bag was filled with 400 mL of tap water, and the remaining side was heat-sealed to seal the packaging bag to form a retort packaging bag filled with the contents. The retort packaging bag was subjected to a high-retort treatment using steam at 135°C and 0.3 MPa for 30 minutes. A laminate with a size of 297 mm × 210 mm was cut out from the retort packaging bag after the retort treatment, and a flexing load (stroke: 155 mm, flexing motion: 440°) was applied thereto 10 times according to ASTM F 392 using a Gelbo Flex tester (manufactured by Tester Sangyo Co., Ltd.). After the application of the flexing load, the oxygen transmission rate and the water vapor transmission rate of the laminate were measured in the same manner as described above.

(Measurement of wet peel strength after semi-retort treatment)

The wet peel strength of each of the laminates prepared from the barrier films of Experimental Examples 2-1 to 2-30 was measured by the method of measuring the wet peel strength of the laminate according to the present disclosure described above. A Tensilon universal material testing machine (trade name: STA-1150, manufactured by Orientec Co., Ltd.) was used as the measuring instrument.

(Rupture test)

Each of the laminates prepared from the barrier films of Experimental Examples 2-1 to 2-30 was cut into an A4 size, folded in half along the long side to make the heat sealant films face each other, and heat-sealed at a width of 7 mm on three sides including the folded part, thereby preparing a three-side-sealed packaging bag. This packaging bag was filled with 200 mL of tap water, and the remaining side was heat-sealed to seal the packaging bag to form a retort packaging bag filled with the contents. The retort packaging bag was subjected to a semi-retort treatment at 121°C for 30 minutes. The retort packaging bag after the retort treatment was dropped from a height of 150 cm five times horizontally and five times vertically with respect to the long-side direction of the packaging bag, and the presence or absence of rupture was confirmed.

The configurations and the measurement results of Experimental Examples 2-1 to 2-30 are listed in Tables 5 to 9.

Further, Experimental Example 2-23 is a comparative example.

[Table 5]

| Table 5 | | Experimental Example 2-1 | Experimental Example 2-2 | Experimental Example 2-3 | Experimental Example 2-4 | Experimental Example 2-5 | Experimental Example 2-6 |
|---|---|---|---|---|---|---|---|
| Barrier coating layer | | TEOS and PVA | TEOS and PVA | TEOS and PVA | TEOS and PVA | TEOS and PVA | TEOS and PVA |
| Vapor-deposited film | Type | Aluminum oxide | Aluminum oxide | Aluminum oxide | Aluminum oxide | Aluminum oxide | Aluminum oxide |
| | Plasma pretreatment | Performed | Performed | Performed | Performed | Performed | Performed |
| Polymer film | | Experimental Example 1-1 | Experimental Example 1-2 | Experimental Example 1-3 | Experimental Example 1-4 | Experimental Example 1-5 | Experimental Example 1-6 |
| Oxygen transmission rate [cc/(m$^2$·day·atm)] | Barrier film | 0.7 | 0.8 | 0.3 | 0.3 | 0.5 | 0.4 |
| | Laminate | 0.7 | 0.7 | 0.2 | 0.2 | 0.4 | 0.4 |
| | After semi-retort treatment | 0.9 | 0.8 | 0.2 | 0.2 | 1.3 | 1.1 |
| | After high-retort treatment | 1.4 | 1.2 | 0.7 | 0.7 | 2.9 | 1.9 |
| | After high-retort treatment and flexing treatment | 1.6 | 1.5 | 0.9 | 1.0 | 3.9 | 2.5 |
| Water vapor transmission rate [g/(m$^2$·day)] | Barrier film | 0.7 | 0.7 | 0.5 | 0.5 | 0.9 | 0.7 |
| | Laminate | 0.5 | 0.6 | 0.5 | 0.5 | 0.7 | 0.6 |
| | After semi-retort treatment | 0.6 | 0.7 | 0.5 | 0.5 | 1.2 | 0.9 |
| | After high-retort treatment | 1.1 | 1.0 | 0.8 | 0.9 | 2.1 | 1.4 |
| | After high-retort treatment and flexing treatment | 1.3 | 1.3 | 0.9 | 1.0 | 2.1 | 1.5 |
| Wet peel strength after semi-retort treatment [N/15 mm] | | 0.6 | 0.7 | 0.8 | 0.9 | 0.5 | 0.5 |
| Rupture test | | No rupture | No rupture | No rupture | No rupture | No rupture | No rupture |

TEOS: tetraethoxysilane
PVA: polyvinyl alcohol

[Table 6]

| Table 6 | | | Experimental Example 2-7 | Experimental Example 2-8 | Experimental Example 2-9 | Experimental Example 2-10 | Experimental Example 2-11 | Experimental Example 2-12 |
|---|---|---|---|---|---|---|---|---|
| Barrier coating layer | | Type | TEOS and PVA | TEOS and PVA | - | TEOS and PVA | - | TEOS and PVA |
| Vapor-deposited film | | Type | Aluminum oxide | Silicon oxide | Silicon oxide | Silicon oxide | Silicon oxide | Aluminum oxide |
| | | Plasma pretreatment | Performed | Performed | Performed | Performed | Performed | Performed |
| Polymer film | | | Experimental Example 1-7 | Experimental Example 1-3 | Experimental Example 1-3 | Experimental Example 1-7 | Experimental Example 1-7 | Experimental Example 1-21 |
| Oxygen transmission rate [cc/(m²·day·atm)] | | Barrier film | 0.3 | 0.2 | 0.4 | 0.2 | 0.5 | 0.7 |
| | | Laminate | 0.2 | 0.1 | 0.3 | 0.1 | 0.4 | 0.6 |
| | | After semi-retort treatment | 0.3 | 0.1 | 0.4 | 0.2 | 0.4 | 0.9 |
| | | After high-retort treatment | 0.8 | 0.2 | 0.7 | 0.3 | 0.8 | 1.5 |
| | | After high-retort treatment and flexing treatment | 1.2 | 0.7 | 1.2 | 0.8 | 1.4 | 1.5 |
| Water vapor transmission rate [g/(m²·day)] | | Barrier film | 0.6 | 0.3 | 0.5 | 0.4 | 0.6 | 0.8 |
| | | Laminate | 0.5 | 0.3 | 0.4 | 0.3 | 0.5 | 0.6 |
| | | After semi-retort treatment | 0.5 | 0.3 | 0.7 | 0.4 | 0.5 | 0.7 |
| | | After high-retort treatment | 1.1 | 0.3 | 0.7 | 0.4 | 0.7 | 1.3 |
| | | After high-retort treatment and flexing treatment | 1.2 | 0.5 | 0.9 | 0.5 | 0.9 | 1.5 |
| Wet peel strength after semi-retort treatment [N/15 mm] | | | 1.1 | 0.8 | 2.5 | 1.2 | 2.6 | 0.2 |
| Rupture test | | | No rupture | No rupture | No rupture | No rupture | No rupture | No rupture |

TEOS: tetraethoxysilane
PVA: polyvinyl alcohol

[Table 7]

| Table 7 | | Experimental Example 2-13 | Experimental Example 2-14 | Experimental Example 2-15 | Experimental Example 2-16 | Experimental Example 2-17 | Experimental Example 2-18 |
|---|---|---|---|---|---|---|---|
| Barrier coating layer | | TEOS and PVA | TEOS and PVA | TEOS and PVA | TEOS and PVA | TEOS and PVA | TEOS and PVA |
| Vapor-deposited film | Type | Silicon oxide | Silicon oxide | Silicon oxide | Silicon oxide | Silicon oxide | Silicon oxide |
| | Plasma pretreatment | Performed | Performed | Performed | Performed | Performed | Performed |
| Polymer film | | Experimental Example 1-8 | Experimental Example 1-9 | Experimental Example 1-10 | Experimental Example 1-18 | Experimental Example 1-19 | Experimental Example 1-20 |
| Oxygen transmission rate [cc/(m$^2$·day·atm)] | Barrier film | 0.2 | 0.2 | 0.2 | 0.4 | 0.2 | 0.2 |
| | Laminate | 0.2 | 0.1 | 0.1 | 0.3 | 0.1 | 0.1 |
| | After semi-retort treatment | 0.3 | 0.3 | 0.1 | 0.4 | 0.2 | 0.3 |
| | After high-retort treatment | 0.4 | 0.6 | 0.3 | 0.5 | 0.4 | 0.3 |
| | After high-retort treatment and flexing treatment | 0.9 | 1.1 | 0.6 | 0.9 | 0.7 | 0.7 |
| Water vapor transmission rate [g/(m$^2$·day)] | Barrier film | 0.4 | 0.5 | 0.4 | 0.4 | 0.3 | 0.3 |
| | Laminate | 0.4 | 0.5 | 0.3 | 0.3 | 0.2 | 0.2 |
| | After semi-retort treatment | 0.5 | 0.6 | 0.3 | 0.4 | 0.4 | 0.3 |
| | After high-retort treatment | 0.6 | 0.6 | 0.4 | 0.5 | 0.4 | 0.4 |
| | After high-retort treatment and flexing treatment | 0.6 | 0.6 | 0.5 | 0.5 | 0.5 | 0.4 |
| Wet peel strength after semi-retort treatment [N/15 mm] | | 1.2 | 1.0 | 1.4 | 0.9 | 1.2 | 1.3 |
| Rupture test | | No rupture | No rupture | No rupture | No rupture | No rupture | No rupture |

TEOS: tetraethoxysilane
PVA: polyvinyl alcohol

[Table 8]

| Table 8 | | Experimental Example 2-19 | Experimental Example 2-20 | Experimental Example 2-21 | Experimental Example 2-22 | Experimental Example 2-23 | Experimental Example 2-24 |
|---|---|---|---|---|---|---|---|
| Barrier coating layer | | TEOS and PVA | - | TEOS and PVA | - | TEOS and PVA | TEOS and PVA |
| Vapor-deposited film | Type | Carbon-containing silicon oxide | Carbon-containing silicon oxide | Carbon-containing silicon oxide | Carbon-containing silicon oxide | Aluminum oxide | Aluminum oxide |
| | Plasma pretreatment | Performed | Performed | Performed | Performed | Performed | Performed |
| Polymer film | | Experimental Example 1-3 | Experimental Example 1-3 | Experimental Example 1-7 | Experimental Example 1-7 | Experimental Example 1-11 | Experimental Example 1-12 |
| Oxygen transmission rate [cc/(m$^2$·day·atm)] | Barrier film | 0.2 | 0.4 | 0.2 | 0.5 | 3.5 | 0.8 |
| | Laminate | 0.2 | 0.4 | 0.2 | 0.5 | 3.4 | 0.8 |
| | After semi-retort treatment | 0.6 | 0.8 | 0.7 | 0.9 | 8.1 | 2.3 |
| | After high-retort treatment | 0.7 | 1.1 | 0.7 | 1.2 | 12.5 | 5.1 |
| | After high-retort treatment and flexing treatment | 0.8 | 1.4 | 0.8 | 1.5 | 14.2 | 6.8 |
| Water vapor transmission rate [g/(m$^2$·day)] | Barrier film | 0.2 | 0.4 | 0.3 | 0.4 | 3.8 | 0.8 |
| | Laminate | 0.2 | 0.4 | 0.3 | 0.4 | 2.1 | 0.6 |
| | After semi-retort treatment | 0.7 | 0.9 | 0.8 | 1.1 | 2.1 | 1.6 |
| | After high-retort treatment | 0.8 | 1.1 | 0.9 | 1.3 | 2.1 | 1.6 |
| | After high-retort treatment and flexing treatment | 0.9 | 1.2 | 1.1 | 1.4 | 2.1 | 1.8 |
| Wet peel strength after semi-retort treatment [N/15 mm] | | 2.3 | 2.3 | 2.2 | 2.3 | 0.2 | 0.2 |
| Rupture test | | No rupture | No rupture | No rupture | No rupture | No rupture | No rupture |
| TEOS: tetraethoxysilane<br>PVA: polyvinyl alcohol | | | | | | | |

[Table 9]

| Table 9 | | Experimental Example 2-25 | Experimental Example 2-26 | Experimental Example 2-27 | Experimental Example 2-28 | Experimental Example 2-29 | Experimental Example 2-30 |
|---|---|---|---|---|---|---|---|
| Barrier coating layer | | TEOS及びPVA | TEOS及びPVA | - | - | - | - |
| Vapor-deposited film | Type | Aluminum oxide | Aluminum oxide | Aluminum | Aluminum | Silicon oxide | Silicon oxide |
| | Plasma pretreatment | Performed | Performed | Performed | Performed | Performed | Performed |
| Polymer film | | Experimental Example 1-16 | Experimental Example 1-17 | Experimental Example 1-3 | Experimental Example 1-7 | Experimental Example 1-5 | Experimental Example 1-6 |
| Oxygen transmission rate [cc/(m$^2$·day·atm)] | Barrier film | 0.3 | 0.8 | 0.7 | 0.6 | 0.5 | 0.4 |
| | Laminate | 0.2 | 0.8 | 0.6 | 0.6 | 0.4 | 0.4 |
| | After semi-retort treatment | 0.4 | 2.5 | 1.8 | 1.7 | 0.6 | 0.6 |
| | After high-retort treatment | 0.8 | 5.3 | 3.2 | 3.5 | 0.9 | 0.8 |
| | After high-retort treatment and flexing treatment | 0.9 | 8.2 | 4.2 | 4.3 | 1.7 | 1.5 |
| Water vapor transmission rate [g/(m$^2$·day)] | Barrier film | 0.6 | 0.8 | 0.8 | 0.8 | 0.7 | 0.7 |
| | Laminate | 0.5 | 0.6 | 0.7 | 0.7 | 0.5 | 0.6 |
| | After semi-retort treatment | 0.5 | 1.7 | 2.0 | 2.1 | 0.7 | 0.7 |
| | After high-retort treatment | 0.9 | 1.7 | 2.1 | 2.1 | 0.9 | 0.8 |
| | After high-retort treatment and flexing treatment | 0.9 | 1.8 | 2.1 | 2.1 | 1.2 | 1.0 |
| Wet peel strength after semi-retort treatment [N/15 mm] | | 0.8 | 0.2 | 0.7 | 0.8 | 2.3 | 2.5 |
| Rupture test | | Rupture | Rupture | No rupture | No rupture | No rupture | No rupture |

TEOS: tetraethoxysilane
PVA: polyvinyl alcohol

As listed in Tables 5 to 9, the barrier films of Experimental Examples 2-1 to 2-22 and 2-24 to 2-30 and the laminates prepared from the barrier films had small oxygen transmission rates and small water vapor transmission rates, and exhibited excellent gas barrier properties. Further, the barrier films of Experimental Examples 2-1 to 2-22, 2-25, 2-29, and 2-30 and the laminates prepared from the barrier films had small oxygen transmission rates and small water vapor transmission rates after the semi-retort treatment and after the high-retort treatment for 30 minutes, and exhibited excellent heat resistance. That is, the barrier films of Experimental Examples 2-1 to 2-22, 2-25, 2-29, and 2-30 and the laminates prepared from the barrier films exhibited excellent gas barrier properties and excellent heat resistance.

Further, as listed in Tables 5 to 9, the laminates prepared from the barrier films of Experimental Examples 2-1 to 2-11, 2-13 to 2-22, 2-25, 2-29, and 2-30 had high wet peel strength after the semi-retort treatment. Among these, in the laminates prepared from the barrier films of Experimental Examples 2-1 to 2-8, 2-10, 2-13 to 2-18, and 2-25, which had a wet peel strength of less than 2 N after the semi-retort treatment, it was confirmed that peeling occurred between the first resin layer and the vapor-deposited film. In the laminates prepared from the barrier films of Experimental Examples 2-9, 2-11, 2-19 to 2-22, 2-29, and 2-30, which had a wet peel strength of 2 N or greater after the semi-retort treatment, it was confirmed that cohesive failure occurred in the adhesive layer between the polypropylene base material film and the barrier film or that peeling occurred between the polypropylene base material film and the printed layer.

In addition, the laminates prepared from the barrier films of Experimental Examples 2-12, 2-23, 2-24, and 2-26 had low wet peel strength after the semi-retort treatment.

In the barrier films of Experimental Examples 2-24 to 2-26, it was considered that since the ratio of the number of dicarboxylic acid units contained in the aromatic polyamide to the total number of aminocarboxylic acid units and dicarboxylic acid units contained in the polyamide resin constituting the first resin layer was small, that is, the content of the aromatic polyamide with excellent heat resistance and water resistance in the first resin layer was small, the first resin layer 11 shrank in association with the shrinkage of the polymer film 10 during the semi-retort treatment or swelled due to moisture during the semi-retort treatment, causing strain between the first resin layer 11 and the vapor-deposited film 15, which resulted in weakened adhesion to the vapor-deposited film and low wet peel strength.

In the barrier film of Experimental Example 2-12, it was considered that since the ratio of the number of dicarboxylic acid units contained in the aromatic polyamide to the total number of aminocarboxylic acid units and dicarboxylic acid units contained in the polyamide resin constituting the first resin layer was large, but the ratio of the number of isophthalic acid units contained in the aromatic polyamide to the total number of aminocarboxylic acid units and dicarboxylic acid units contained in the polyamide resin constituting the first resin layer was small, the resin constituting the first resin layer was easily crystallized during the formation of the polymer film 10, and the first resin layer shrank during the semi-retort treatment due to internal stress generated by the crystallization, which resulted in weakened adhesion to the vapor-deposited film and low wet peel strength.

(Evaluation of gas barrier properties after high-retort treatment for 60 minutes)

Each of the laminates prepared from the barrier films of Experimental Examples 2-1 to 2-4, 2-7, 2-9, 2-11, 2-19, 2-20, 2-29, and 2-30 was cut into an A4 size, folded in half along the long side to make the heat sealant films face each other, and heat-sealed at a width of 7 mm on three sides including the folded part, thereby preparing a three-side-sealed packaging bag. This packaging bag was filled with 200 mL of tap water, and the remaining side was heat-sealed to seal the packaging bag to form a retort packaging bag filled with the contents. The retort packaging bag was subjected to a high-retort treatment using steam at 135°C and 0.3 MPa for 60 minutes. The laminate was cut out from the retort packaging bag after the retort treatment, and the oxygen transmission rate and the water vapor transmission rate were measured in the same manner as described above.

The configurations and the measurement results of Experimental Examples 2-1 to 2-30 are listed in Tables 10 and 11.

[Table 10]

| Table 10 | | | Experimental Example 2-1 | Experimental Example 2-2 | Experimental Example 2-3 | Experimental Example 2-4 | Experimental Example 2-7 | Experimental Example 2-8 | Experimental Example 2-9 |
|---|---|---|---|---|---|---|---|---|---|
| Barrier coating layer | Type | | TEOS and PVA | TEOS and PVA | TEOS and PVA | TEOS and PVA | TEOS and PVA | TEOS and PVA | - |
| | Plasma pretreatment | | Performed | Performed | Performed | Performed | Performed | Performed | Performed |
| Vapor-deposited film | Type | | Aluminum oxide | Aluminum oxide | Aluminum oxide | Aluminum oxide | Aluminum oxide | Silicon oxide | Silicon oxide |
| | Polymer film | | Experimental Example 1-1 | Experimental Example 1-2 | Experimental Example 1-3 | Experimental Example 1-4 | Experimental Example 1-7 | Experimental Example 1-3 | Experimental Example 1-3 |
| Oxygen transmission rate [cc/(m²·day·atm)] after high-retort treatment for 60 minutes | | | 11.7 | 10.1 | 5.9 | 5.9 | 6.7 | 0.5 | 0.9 |
| Water vapor transmission rate [g/(m²·day)] after high-retort treatment for 60 minutes | | | 2.1 | 2.1 | 2.0 | 2.0 | 2.1 | 0.6 | 0.8 |

TEOS: tetraethoxysilane
PVA: polyvinyl alcohol

[Table 11]

| Table 11 | | Experimental Example 2-10 | Experimental Example 2-11 | Experimental Example 2-19 | Experimental Example 2-20 | Experimental Example 2-29 | Experimental Example 2-30 |
|---|---|---|---|---|---|---|---|
| Barrier coating layer | | TEOS and PVA | - | TEOS and PVA | - | - | - |
| Vapor-deposited film | Type | Silicon oxide | Silicon oxide | Carbon-containing silicon oxide | Carbon-containing silicon oxide | Silicon oxide | Silicon oxide |
| | Plasma pretreatment | Performed | Performed | Performed | Performed | Performed | Performed |
| Polymer film | | Experimental Example 1-7 | Experimental Example 1-7 | Experimental Example 1-3 | Experimental Example 1-3 | Experimental Example 1-5 | Experimental Example 1-6 |
| Oxygen transmission rate [cc/(m$^2$·day·atm)] after high-retort treatment for 60 minutes | | 0.5 | 0.8 | 0.8 | 1.0 | 1.9 | 1.5 |
| Water vapor transmission rate [g/(m$^2$·day)] after high-retort treatment for 60 minutes | | 0.5 | 0.7 | 1.1 | 1.9 | 0.9 | 0.8 |

TEOS: tetraethoxysilane
PVA: polyvinyl alcohol

As listed in Tables 10 and 11, the laminates prepared from the barrier films of Experimental Examples 2-8 to 2-11, 2-19, 2-20, 2-29, and 2-30 had low oxygen transmission rates and low water vapor transmission rates even after the high-retort treatment for 60 minutes and exhibited excellent heat resistance. Among these, the laminates prepared from the barrier films of Experimental Examples 2-8 to 2-11 had particularly low oxygen transmission rates and low water vapor transmission rates after the high-retort treatment for 60 minutes and exhibited more excellent heat resistance.

Reference Signs List

10 polymer film

11 first resin layer

12 second resin layer

13 third resin layer

14 fourth resin layer

15 vapor-deposited film

16 barrier coating layer

17 adhesive layer

18 heat sealant film

19 polypropylene base material film

25 easy-opening means

26 notch

30 packaging bag

31 upper portion

31a upper seal portion

32 lower portion

32a lower seal portion

33 side portion

33a side seal portion

34 front-surface laminate

35 rear-surface laminate

37 accommodating portion

D1 first direction

D2 second direction

S distance

## Claims

1. A barrier film comprising: a vapor-deposited film on a first resin layer side of a polymer film,

   wherein the polymer film includes a first resin layer, a second resin layer, and a third resin layer in this order,
   the first resin layer constitutes one outermost layer of the polymer film,
   the first resin layer contains a polyamide resin, the polyamide resin contains an aromatic polyamide,
   a ratio of the number of dicarboxylic acid units contained in the aromatic polyamide to a total number of aminocarboxylic acid units and dicarboxylic acid units contained in the polyamide resin constituting the first resin layer is greater than 65% by mole,
   a ratio of the number of isophthalic acid units contained in the aromatic polyamide to the total number of the aminocarboxylic acid units and the dicarboxylic acid units contained in the polyamide resin constituting the first resin layer is 30% by mole or greater,
   the second resin layer contains an acid-modified product of polypropylene,
   the third resin layer contains homopolypropylene, and
   the vapor-deposited film contains an inorganic oxide.

2. The barrier film according to claim 1, wherein the ratio of the number of the dicarboxylic acid units contained in the aromatic polyamide to the total number of the aminocarboxylic acid units and the dicarboxylic acid units contained in the polyamide resin constituting the first resin layer is 80% by mole or greater.

3. The barrier film according to claim 1 or 2, wherein the ratio of the number of the isophthalic acid units contained in the aromatic polyamide to the total number of the aminocarboxylic acid units and the dicarboxylic acid units contained in the polyamide resin constituting the first resin layer is 55% by mole or greater.

4. The barrier film according to claim 1 or 2, wherein the first resin layer contains one type of polyamide resin.

5. The barrier film according to claim 4, wherein a content of the polyamide resin in the first resin layer is 70% by mass or greater.

6. The barrier film according to claim 1 or 2, wherein the polyamide resin contained in the first resin layer consists of two types, a first polyamide and a second polyamide,

   the first polyamide is an aromatic polyamide, and
   the second polyamide is an aromatic polyamide or an aliphatic polyamide.

7. The barrier film according to claim 6, wherein a content of the first polyamide in the first resin layer is 76% by mass or greater and less than 100% by mass.

8. The barrier film according to claim 6, wherein a content of the second polyamide in the first resin layer is greater than 0% by mass and 24% by mass or less.

9. The barrier film according to claim 1 or 2, wherein a content of the polypropylene in the polymer film is 70% by mass or greater.

10. The barrier film according to claim 1 or 2, wherein the third resin layer has the largest thickness among the first resin layer, the second resin layer, and the third resin layer, and

    the thickness of each layer constituting the polymer film satisfies Expressions (1) and (2),
    thickness of first resin layer $\leq$ (thickness of polymer film)/10 (1)
    thickness of second resin layer $\leq$ (thickness of polymer film)/5 (2).

11. The barrier film according to claim 1 or 2, wherein the polymer film includes a fourth resin layer on a side of the third resin layer opposite to the second resin layer, and
    the fourth resin layer contains a copolymer of propylene and an olefin other than propylene.

**12.** The barrier film according to claim 1 or 2, further comprising: a barrier coating layer on the vapor-deposited film side.

**13.** A laminate comprising: the barrier film according to claim 1 or 2; and a heat sealant film.

**14.** The laminate according to claim 13, further comprising: a polypropylene base material film.

**15.** The laminate according to claim 13, wherein the laminate includes the polypropylene base material film on a side of the barrier film opposite to the heat sealant film, and
a wet peel strength is 0.3 N/15 mm or greater when a film including the polypropylene base material film and a film including the barrier film and the heat sealant film are peeled off in conformity with JIS K 6854-2:1999 after a retort treatment is performed at 121°C and 0.2 MPa for 30 minutes.

**16.** A packaging bag comprising: the laminate according to claim 13.

**17.** The packaging bag according to claim 16, wherein the packaging bag is a heat-sterilized food pouch.

**18.** The packaging bag according to claim 17, wherein the laminate includes the polypropylene base material film on a side of the barrier film opposite to the heat sealant film, and
a wet peel strength is 0.3 N/15 mm or greater when a film including the polypropylene base material film and a film including the barrier film and the heat sealant film are peeled off in conformity with JIS K 6854-2:1999.

**19.** A method of producing a barrier film which includes a vapor-deposited film on a first resin layer side of a polymer film,

wherein the polymer film includes a first resin layer, a second resin layer, and a third resin layer in this order,
the first resin layer constitutes one outermost layer of the polymer film,
the first resin layer contains a polyamide resin, the polyamide resin contains an aromatic polyamide,
a ratio of the number of dicarboxylic acid units contained in the aromatic polyamide to a total number of aminocarboxylic acid units and dicarboxylic acid units contained in the polyamide resin constituting the first resin layer is greater than 65% by mole,
a ratio of the number of isophthalic acid units contained in the aromatic polyamide to the total number of the aminocarboxylic acid units and the dicarboxylic acid units contained in the polyamide resin constituting the first resin layer is 30% by mole or greater,
the second resin layer contains an acid-modified product of polypropylene,
the third resin layer contains homopolypropylene,
the vapor-deposited film contains an inorganic oxide, and
the vapor-deposited film is formed by using a physical vapor deposition method.

*Fig. 1*

*Fig. 2*

*Fig. 3*

*Fig. 4*

*Fig. 5*

*Fig. 6*

*Fig. 7*

Fig. 8

*Fig. 9*

## INTERNATIONAL SEARCH REPORT

| International application No. |
| --- |
| **PCT/JP2025/023481** |

| A. | CLASSIFICATION OF SUBJECT MATTER |
| --- | --- |

*B32B 27/32*(2006.01)i; *B32B 9/00*(2006.01)i; *B32B 27/34*(2006.01)i; *B65D 65/40*(2006.01)i
FI: B32B27/32 D; B32B27/34; B32B27/32 E; B32B9/00 A; B65D65/40 D

According to International Patent Classification (IPC) or to both national classification and IPC

| B. | FIELDS SEARCHED |
| --- | --- |

Minimum documentation searched (classification system followed by classification symbols)

B32B; B65D

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | Microfilm of the specification and drawings annexed to the request of Japanese Utility Model Application No. 091708/1976 (Laid-open No. 010880/1978) (TORAY INDUSTRIES) 30 January 1978 (1978-01-30), claims, p. 2, lines 2- last line, examples | 1-5, 9-19 |
| A | | 6-8 |
| Y | JP 2023-020738 A (DAI NIPPON PRINTING CO., LTD.) 09 February 2023 (2023-02-09) claims, paragraphs [0001]-[0010], [0016], [0023], [0042]-[0043], [0068]-[0072], [0087]-[0088], [0096]-[0097], [0116]-[0119], [0122], [0143], [0155]-[0157], [0163]-[0164], [0215]-[0222], examples | 1-5, 9-19 |
| P, X | JP 2025-060414 A (DAI NIPPON PRINTING CO., LTD.) 10 April 2025 (2025-04-10) claims, paragraphs [0001]-[0012], [0026]-[0119], [0194]-[0213], [0220]-[0223], [0228]-[0233], example 14, drawings | 1-2, 6, 9-19 |
| A | WO 2018/180401 A1 (MITSUBISHI GAS CHEMICAL COMPANY, INC.) 04 October 2018 (2018-10-04) | 1-19 |

| ✓ Further documents are listed in the continuation of Box C. | ✓ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **11 September 2025** | **22 September 2025** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

| International application No. |
|---|
| **PCT/JP2025/023481** |

**C.      DOCUMENTS CONSIDERED TO BE RELEVANT**

| Category* | Citation of document, with indication, where appropriate, of the relevant passages | Relevant to claim No. |
|---|---|---|
| A | WO 2018/083962 A1 (MITSUBISHI GAS CHEMICAL COMPANY, INC.) 11 May 2018 (2018-05-11) | 1-19 |

Form PCT/ISA/210 (second sheet) (July 2022)

**INTERNATIONAL SEARCH REPORT**
Information on patent family members

| International application No. |
| --- |
| **PCT/JP2025/023481** |

| Patent document cited in search report | | | Publication date (day/month/year) | Patent family member(s) | | | Publication date (day/month/year) |
| --- | --- | --- | --- | --- | --- | --- | --- |
| JP | 53-010880 | U1 | 30 January 1978 | (Family: none) | | | |
| JP | 2023-020738 | A | 09 February 2023 | (Family: none) | | | |
| JP | 2025-060414 | A | 10 April 2025 | JP | 2025-60360 | A | |
| | | | | JP | 7569947 | B1 | |
| | | | | WO | 2025/070809 | A1 | |
| WO | 2018/180401 | A1 | 04 October 2018 | US | 2020/0079959 | A1 | |
| | | | | EP | 3604446 | A1 | |
| | | | | CN | 110461946 | A | |
| | | | | TW | 201903048 | A | |
| WO | 2018/083962 | A1 | 11 May 2018 | US | 2019/0248116 | A1 | |
| | | | | EP | 3536496 | A1 | |
| | | | | CN | 109890609 | A | |
| | | | | KR | 10-2019-0082763 | A | |
| | | | | TW | 201819197 | A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022007964 A
- JP 2011214089 A
- JP 2012076292 A
- WO 2019087960 A